# EUROPEAN PATENT APPLICATION

(11) **EP 1 860 793 A1**
(43) Date of publication of application: **28.11.2007**
(21) Application number: 05783607.4
(22) Date of filing: 16.09.2005
(51) Int. Cl.: H04B 7/08, H04J 11/00

(54) **DIVERSITY RECEIVER**

(30) Priority: 16.03.2005 JP 2005075037
(71) Applicant: Fujitsu Ltd., Kawasaki-shi, Kanagawa 211-8588 (JP)
(72) Inventor: NAGATA, Hidenari c/o FUJITSU LIMITED,, Kawasaki-shi, Kanagaw a 2118588 (JP)
(74) Representative: Holtby, Christopher Lawrence
(86) International application number: PCT/JP2005/017161
(87) International publication number: WO 2006/098050

(57) **Abstract**

A diversity receiver provided with a plurality of noise amount calculation circuits receiving a plurality of branches of diversity signals and calculating an amount of noise for each said branch and a diversity combining circuit comparing magnitudes of amounts of noise calculated by said noise amount calculation circuits and changing a diversity combining ratio in accordance with the amount of noise of power of a branch with a large amount of noise.

## Description

### TECHNICAL FIELD

The present invention relates to a diversity receiver combining a plurality of branches of demodulated signals, more particularly relates to a diversity receiver exhibiting excellent reception performance even when the branches of demodulated signals include noise.

### BACKGROUND ART

In the past, as a diversity receiver receiving a wireless signal by a diversity system, for example, an OFDM (Orthogonal Frequency Division Multiplexing) receiver having two branches (branch 1 and branch 2) has been commercialized.

Further, for example, in OFDM signal processing of digital television broadcast or digital radio broadcast receivers or wireless LANs (Local Area Networks), more superior performance OFDM signal processing LSIs and OFDM receivers are demanded.

Here, diversity reception technology is technology enabling stable reception by using a plurality of antennas and selecting or combining the signals received by that plurality of antennas. A "branch" means one received signal in the diversity reception.

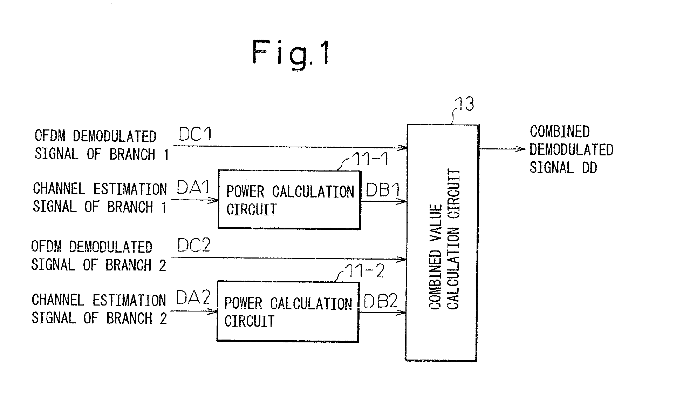

Figure 1 is a block circuit diagram showing principal parts of an example of a conventional diversity receiver and shows principal parts of an example of a diversity combining circuit used for an OFDM receiver (OFDM signal processing LSI).

As shewn in Fig. 1, a diversity combining circuit is provided with power calculation circuits 11-1, 11-2 and a combined value calculation circuit 13. The power calculation circuit 11-1 calculates an OFDM signal power value DB1 of a branch 1 in accordance with a channel estimation signal DA1 of the branch 1, while, the power calculation circuit 11-2 calculates an OFDM signal power value DB2 of a branch 2 in accordance with a channel estimation signal DA2 of the branch 2.

The combined value calculation circuit 13 receives demodulated data DC1 and the OFDM signal power value DB1 of the branch 1 and demodulated data DC2 and the OFDM signal power value DB2 of the branch 2 and combines the OFDM demodulated signal DC1 of the branch 1 and the OFDM demodulated signal DC2 of the branch 2 in accordance with the ratio of the OFDM signal power value DB1 of the branch 1 and the OFDM signal power value DB2 of the branch 2 by the maximum ratio combining method to calculate a combined demodulated signal DD.

However, in the past, as a diversity receiver for receiving an OFDM signal able to perform selective combination or maximum ratio combination by the optimum ratio even when the noise powers of the branches are not equal, a diversity receiver has been proposed which demodulates the received signal for each branch by FFT processing, cumulatively adds the data containing a noise component over a certain bandwidth, and individually finds the noise powers of the branches so as to estimate the values of the amplification rates of the AGC amplifiers provided at the reception high frequency stages of the branches, noise figures, etc. from the baseband signal after FFT processing and combine the signals by the optimum ratio (for example, see Patent Document 1).

Further, in the past, to enable diversity reception having the expected performance by the maximum ratio combining method, there has been proposed an OFDM receiver provided with a noise level detection circuit receiving as input a digital OFDM signal or carrier signal train and detecting and outputting a noise level included in the digital OFDM signal or a noise level included in the carrier signal train, a noise level ratio calculation circuit receiving as input the noise level and calculating and outputting a noise level ratio with a reference noise level, and a noise level equalization circuit receiving as input the noise level ratio and outputting a carrier signal comprised of the carrier signal train multiplied by the noise level ratio (for example, see Patent Document 2).

Patent Document 1: JP-2004-312333-A
Patent Document 2: JP-2004-112155-A

### DISCLOSURE OF THE INVENTION

### PROBLEMS TO BE SOLVED BY THE INVENTION

As explained above, in the past, for example, an OFDM receiver using a diversity system generally uses the maximum ratio combining method. The amount of noise was not considered. For that reason, even when the amount of noise of a certain branch was greater than another branch, that degraded signal was also combined - even to the point of deterioration over the reception performance of the branch with little amount of noise alone.

That is, for example, in the conventional diversity receiver shown in the above-mentioned Fig. 1 (diversity combining circuit), the amounts of noise of the branches were not considered, so when the amount of noise of one branch was greater than the amount of noise of another branch, the OFDM signal power value of the one branch was judged to be larger than the OFDM signal power value of the other branch and as a result the combined value calculation circuit 13 combined the branches with a larger combining ratio of the OFDM demodulated signal of the branch with a large signal degradation. For that reason, in some cases, there was the problem to be solved that the reception performance sometimes ended up deteriorating even more than the performance of a branch with a small amount of noise alone.

The present invention considers the problems in the above-mentioned conventional diversity receiver and has as its object the provision of a diversity receiver combining a plurality of branches of demodulated signals during which reducing the combined amount of a demodulated signal degraded due to noise to thereby improve the reception performance.

### MEANS FOR SOLVING THE PROBLEMS

According to a first aspect of the present invention, there is provided a diversity receiver receiving a plurality of branches of diversity signals, the diversity receiver characterized in that it is provided with a plurality of noise amount calculation circuits calculating an amount of noise for each branch and a diversity combining circuit comparing the magnitudes of the amounts of noise calculated by the noise amount calculation circuits and changing a diversity combining ratio in accordance with the amount of noise of a branch of power with a large amount of noise.

According to a second aspect of the present invention, there is provided a diversity receiver receiving a plurality of branches of diversity signals, the diversity receiver characterized in that it is provided with a plurality of noise amount calculation circuits calculating an amount of noise for each branch and a selective diversity circuit comparing magnitudes of the amounts of noise calculated by the noise amount calculation circuits and selecting the branches and controlling the weighting amounts in accordance with the amount of noise of a branch with a large amount of noise.

According to a third aspect of the present invention, there is provided a diversity receiver receiving a diversity signal, the diversity receiver characterized in that it is provided with a demapping circuit performing demapping in advance before combination and calculating soft judgment bits and a diversity combining circuit deeming the soft judgment bits as the amount of noise, comparing the magnitudes of the amounts of noise of the branches, and changing the diversify combining ratio in accordance with the amount of noise of the power of a branch with a large amount of noise.

According to a fourth aspect of the present invention, there is provided a diversity receiver receiving a diversity signal, the diversity receiver characterized in that it is provided with a demapping circuit performing demapping in advance before combination and calculating soft judgment bits and a selective diversity circuit deeming the soft judgment bits as the amount of noise, comparing magnitudes of the amounts of noise of the branches, and selecting the branches and controlling the weighting amounts in accordance with the amount of noise of a branch with a large amount of noise.

According to a fifth aspect of the present invention, there is provided a diversity receiver combining a plurality of branches of demodulated signals, the diversity receiver characterized in that it combines the plurality of branches of demodulated signals so that the greater the amount of noise of a branch of a demodulated signal, the smaller the combining ratio.

As explained above, the present invention provides a diversity receiver combining a plurality of branches of demodulated signals and combining the plurality of branches of demodulated signals so that the greater the amount of noise of a branch of a demodulated signal, the smaller the combining ratio.

### EFFECT OF THE INVENTION

According to the diversity receiver of the present invention, a plurality of branches of demodulated signals are combined so that the greater the amount of noise of a branch of a demodulated signal, the smaller the combining ratio, so it is possible to reduce the combined amount of a demodulated signal degraded due to noise and improve the reception performance of the diversity receiver.

### BRIEF DESCRIPTION OF THE DRAWINGS

[Fig. 1] A block circuit diagram showing principal parts of an example of a conventional diversity receiver.
[Fig. 2] A block diagram schematically showing an example of a diversity receiver according to the present invention.
[Fig. 3A] A view for explaining a threshold value in a diversity receiver according to the present invention (part 1).
[Fig. 3B] A view for explaining a threshold value in a diversity receiver according to the present invention (part 2).
[Fig. 4] A block circuit diagram showing principal parts of a first embodiment of a diversity receiver according to the present invention.
[Fig. 5] A block circuit diagram showing principal parts of a second embodiment of a diversity receiver according to the present invention.
[Fig. 6] A block circuit diagram showing principal parts of a first stage combined value calculation circuit provided in a second embodiment of a diversity receiver according to the present invention.
[Fig. 7] A block circuit diagram showing principal parts of a second first stage combined value calculation circuit provided in a second embodiment of a diversity receiver according to the present invention.
[Fig. 8] A block circuit diagram showing principal parts of a second stage combined value calculation circuit provided in a second embodiment of a diversity receiver according to the present invention.
[Fig. 9] A block circuit diagram showing principal parts of a third embodiment of a diversity receiver according to the present invention.
[Fig. 10] A block circuit diagram snowing principal parts of a fourth embodiment of a diversity receiver according to the present invention.
[Fig. 11] A view for explaining the operation of a noise threshold value circuit provided in a fourth embodiment of a diversity receiver according to the present invention.
[Fig. 12] A block circuit diagram showing principal parts of a fifth embodiment of a diversity receiver according to the present invention.
[Fig. 13] A block circuit diagram showing principal parts of a first first stage combined value calculation circuit provided in a fifth embodiment of a diversity receiver according to the present invention.
[Fig. 14] A block circuit diagram showing principal parts of a second first stage combined value calculation circuit provided in a fifth embodiment of a diversity receiver according to the present invention.
[Fig. 15] A block circuit diagram showing principal parts of a second stage combined value calculation circuit provided in a fifth embodiment of a diversity receiver according to the present invention.
[Fig. 16] A block circuit diagram showing principal parts of a sixth embodiment of a diversity receiver according to the present invention.
[Fig. 17] A view for explaining the operation of a noise threshold value circuit provided in a sixth embodiment of a diversity receiver according to the present invention.
[Fig. 18] A block circuit diagram showing principal parts of a seventh embodiment of a diversity receiver according to the present invention.
[Fig. 19] A block circuit diagram showing principal parts of an eighth embodiment of a diversity receiver according to the present invention.
[Fig. 20] A view for explaining a modification of an eighth embodiment of the diversity receiver shown in Fig. 19.
[Fig. 21] A view for explaining demapping processing of an eighth embodiment of the diversity receiver shown in Fig. 19 (part 1).
[Fig. 22] A view for explaining demapping processing of an eighth embodiment of the diversity receiver shown in Fig. 19 (part 2).
[Fig. 23] A view for explaining demapping processing of an eighth embodiment of the diversity receiver shown in Fig. 19 (part 3).
[Fig. 24] A view showing an example of an OFDM segment coefficient of a synchronous demodulator in a diversity receiver of the present invention (part 1).
[Fig. 25A] A view showing an example of an OFDM segment coefficient of a synchronous demodulator in a diversity receiver of the present invention (part 2).
[Fig. 25B] A view showing an example of an OFDM segment coefficient of a synchronous demodulator in a diversity receiver of the present invention (part 3).

### DESCRIPTION OF NOTATIONS

21-1, 21-2 power calculation circuit
22-1, 22-2 weighting circuit
23 combined value calculation circuit
24-1, 24-2 noise amount calculation circuit
25 noise amount comparison circuit
26 weighting coefficient calculation circuit
27 noise threshold value circuit
28 weighting coefficient selection circuit
30 first stage combined value calculation circuit
31-1, 31-2 power calculation circuit
32-1, 32-2 weighting circuit
33 combined value calculation circuit
34-1, 34-2 noise amount calculation circuit
35 noise amount comparison circuit
36 weighting coefficient calculation circuit
37 noise threshold value circuit
38 weighting coefficient selection circuit
40 first stage combined value calculation circuit
41-3, 41-4 power calculation circuit
42-3, 42-4 weighting circuit
43 combined value calculation circuit
44-3, 44-4 noise amount calculation circuit
45 noise amount comparison circuit
46 weighting coefficient calculation circuit
47 noise threshold value circuit
48 weighting coefficient selection circuit
50 second stage combined value calculation circuit
52-1, 52-3 weighting circuit
53 combined value calculation circuit
55 noise amount comparison circuit
56 weighting coefficient calculation circuit
57 noise threshold value circuit
58 weighting coefficient selection circuit
61-1 to 61-4 power calculation circuit
62-1 to 62-4 weighting circuit
63 combined value calculation circuit
64-1 to 64-4 noise amount calculation circuit
65 noise amount comparison circuit
66 weighting coefficient calculation circuit
67 noise threshold value circuit
68 weighting coefficient selection circuit
A1, A2 power calculation circuit
A3, A4 noise calculator (noise amount calculation circuit)
A5 noise comparator
A6 ratio calculation circuit
A7 noise threshold value circuit
A8 the combined amount selection circuit
A9 combined value calculation circuit
A30, A40 demapping circuit
A50 weighting amount determination circuit
A70, A80 multiplier
A90 selection circuit
A91 comparison circuit

### BEST MODE FOR CARRYING CUT THE INVENTION

First, before explaining the embodiments of the present invention in detail, the overall configuration of a diversity receiver according to the present invention will be briefly explained.

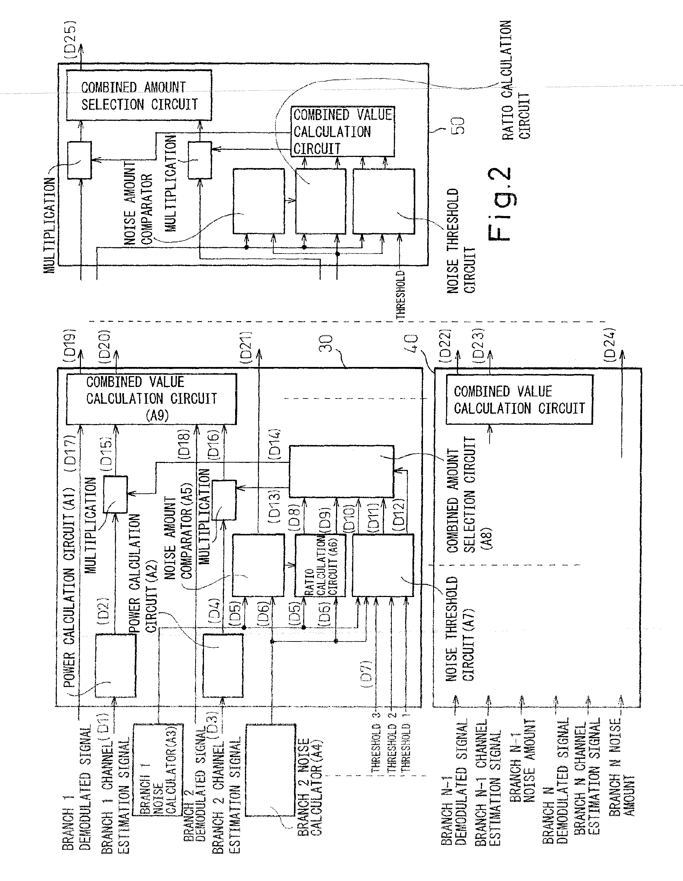

Figure 2 is a block diagram schematically showing an example of a diversity receiver according to the present invention and shows an example of an OFDM receiver receiving and demodulating an OFDM modulated signal.

As shown in Fig. 2, in an OFDM receiver receiving and demodulating an OFDM modulated signal, a first stage combined value calculation circuit 30 finds an OFDM signal power value D2 of the branch 1 (DB1) by a power calculation circuit A1 (11-1) based on a channel estimation signal D1 of the branch 1 (corresponding to DA1 of Fig. 1) and similarly finds an OFDM signal power value D4 of a branch 2 (DB2) by a power calculation circuit A2 (11-2) based on a channel estimation signal D3 of up to the branch 2 (DA2).

Further, the ratios D8 and D9 of the combined amounts of the branches obtained by the noise comparator A5 comparing the amounts of noise D5 and D6 calculated by the noise calculators (noise amount calculation circuits) A3 and A4 of the branches and the ratio calculation circuit A6 and, by giving the amounts of noise D5 and D6 and threshold value D7 (threshold value 1, threshold value 2, threshold value 3) to the noise threshold value circuit A7, the signals D10 and D11 are calculated. The thus calculated signals D10 and D11 and a signal D12 controlling the combined amount selection circuit A8 by the noise level are used to generate the coefficients D13 and D14 controlling the ratios of the combined amounts of the branches.

Further, the OFDM signal power values D2 and D4 of the branches and the generated coefficients D13 and D14 are multiplied to calculate the OFDM signal power values D15 and D16 of the branches 1 and 2. The thus calculated OFDM signal power values D15 and D16 and demodulated signals D17 and D18 are input to the combined value calculation circuit A9 to obtain the combined data D19 and combined power D20.

Note that the noise amount comparator A5 compares the amounts of noise D5 and D6 calculated at the noise calculators A3 and A4 and outputs the amount of the branch with the smaller amount of noise as the amount of noise D21.

Similarly, when there are a plurality of three or more branches, the combined data D22 and combined power D23 obtained by the first stage combined value calculation circuit 40 in the same way as the above circuit 30 and the amount of noise D24 of the smaller branch are output.

Further, to combine the results computed at the first stage combined value calculation circuits 30 and 40, the second stage combined value calculation circuit 50, similar to the circuit 30, receives as input the combined data D19 and D22 as demodulated signals, receives as input the combined powers D20 and D23 as the power values, and further receives as input the amounts of noise D21 and D24 as the amounts of noise for combination processing. Further, the calculated combined signal D25 becomes a combined signal reduced in effect of noise.

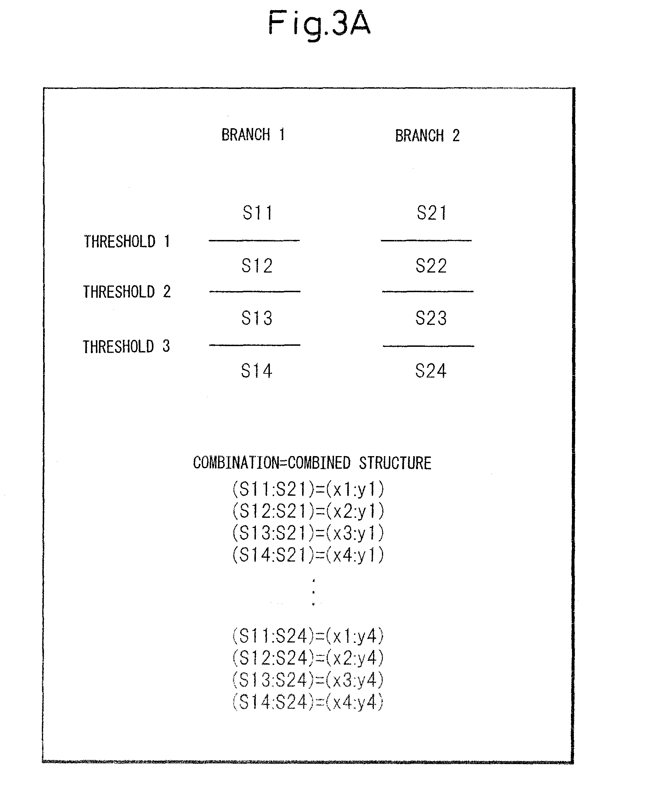

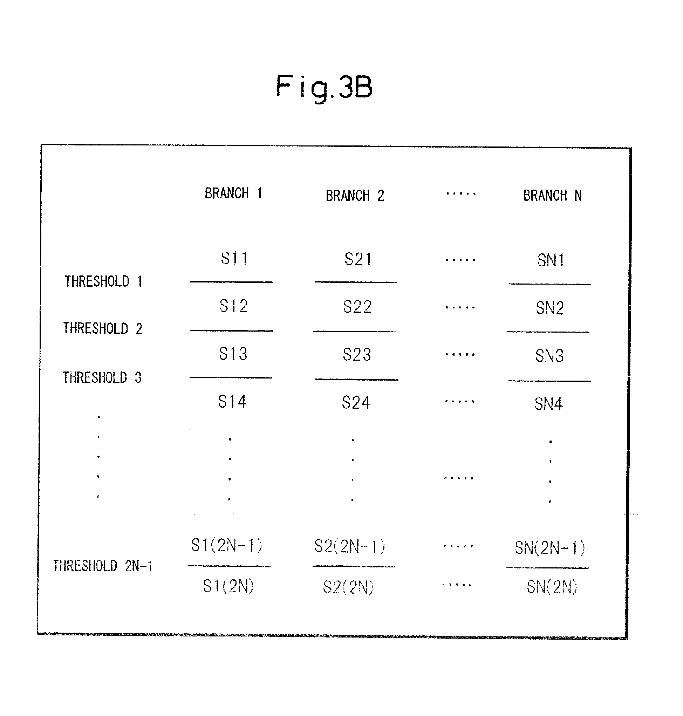

Figures 3A and 3B are views for explaining the threshold values in the diversity receiver according to the present invention. These are for explaining the threshold value D7 input to the noise threshold value circuit A7 in the above-mentioned Fig. 2.

First, as shown in Fig. 3A, when there are two branches, that is, the branch 1 and branch 2, the threshold value 1, threshold value 2, and threshold value 3, that is, three threshold values, are prepared. That is, the amount of noise of the required CN (Carrier to Noise) at the signal reception is made the threshold value 1, the amount of noise of the required CN at the time of giving signals with equivalent amounts of noise to the branches at the time of diversity reception is made the threshold value 2, and the amount of noise when giving an amount of noise equivalent to the required CN at the time of signal reception to one branch and giving noise until the required CN is reached to the other branches at the time of diversity reception is made the threshold value 3.

Depending on these three threshold values, there are four cases at each branch: the case where the amount of noise is less than the threshold value 1 (S11, S21), the case where the amount of noise is greater than the threshold value 1 and less than the threshold value 2 (S12, S22), the case where the amount of noise is greater than the threshold value 2 and less than the threshold value 3 (S13, S23), and the case where the amount of noise is greater than the threshold value 3 (S14, S24).

Next, as shown in Fig. 3B, for example, when there are N number of branches (in the case of simultaneous diversity combination of N number of branches), the number of threshold values is increased along with the increase in the number of branches (N), that is, 2N-1 threshold values are prepared and therefore there are 2N cases.

At each branch, fixed values for combining ratios of (S11, S12)=(8, 8) and (S11, S24)=(8, 2) etc. are given. The OFDM signal power value obtained by multiplication with such a value is used for combination of signals.

Further, when comparing the amounts of noise at the branches and the amount of noise is extremely large at a certain branch, it is possible to control the combined amount of that branch to reduce the effect of that noise and thereby improve the performance of the diversity operation.

Here, the case of 2N-1 threshold values will be explained. Specifically, for example, consider the case of input of four branches. At this time, the number of threshold values becomes 2×4-1=7. That is, the threshold value 1 to threshold value 7 become as follows. Note that the threshold value 1 to threshold value 7 are changed in order for example according to the amount of noise. Further, it is assumed that all of the channels (branches) are the same in reception sensitivity and other performance.

Threshold value 1: Amount of noise at time of required CN at time of reception of only signal
Threshold value 2: Amount of noise at time of required CN at time of reception of only two channels
Threshold value 3: Amount of noise at time of required CN at time of reception of only three channels
Threshold value 4: Amount of noise at time of required CN at time of reception of four (all) channels
Threshold value 5: The amount of noise at the time of the required CN at the time of four channel reception where the amount of noise is increased for only one channel among them and the required CN becomes equal to that at the time of single reception
Threshold value 6: The amount of noise at the time of the required CN at the time of four channel reception where the amount of noise is increased for two channels among them and the required CN becomes equal to that at the time of single reception (at this time, the two channels increased in noise give equal amounts of noise)
Threshold value 7: The amount of noise at the time of the required CN at the time of four channel reception where the amount of noise is increased for three channels among them and the required CN becomes equal to that at the time of single reception (at this time, the three channels increased in noise give equal amounts of noise)

In this way, if the number of branches (channels) is N, the number of threshold values becomes 2(N-1)+1=2N-1.

Below, embodiments of the diversity receiver according to the present invention will be explained in detail with reference to the attached drawings.

### FIRST EMBODIMENT

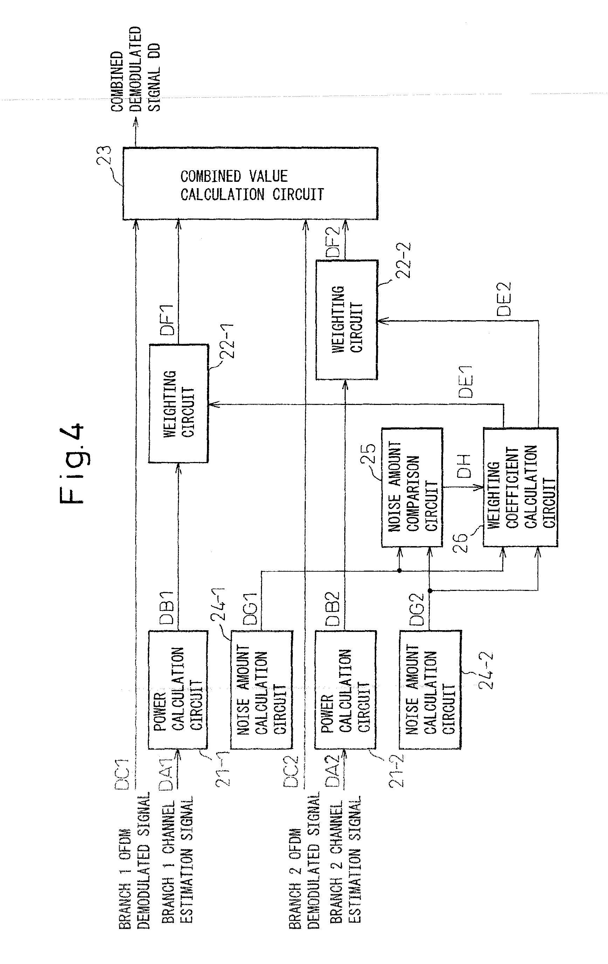

Figure 4 is a block circuit diagram showing principal parts of a first embodiment of a diversity receiver according to the present invention. The first embodiment of the present invention is used for an OFDM receiver having two branches (branch 1, branch 2) and is provided with power calculation circuits 21-1, 21-2, weighting circuits 22-1, 22-2, a combined value calculation circuit 23, noise amount calculation circuits 24-1, 24-2, a noise amount comparison circuit 25, and a weighting coefficient calculation circuit 26.

The power calculation circuit 21-1 calculates an OFDM signal power value DB1 of the branch 1 based on a channel estimation signal DA1 of the branch 1. The power calculation circuit 21-2 calculates an OFDM signal power value DB2 of the branch 2 based on a channel estimation signal DA2 of the branch 2.

The weighting circuit 22-1 multiplies the OFDM signal power value DB1 of the branch 1 with a weighting coefficient DE1 to calculate a weighted OFDM signal power value DF1 of the branch 1. The weighting circuit 22-2 multiplies the OFDM signal power value DB2 of the branch 2 with a weighting coefficient DE2 to calculate a weighted OFDM signal power value DF2 of the branch 2.

The combined value calculation circuit 23 combines the OFDM demodulated signal DC1 of the branch 1 and the OFDM demodulated signal DC2 of the branch 2 in accordance with the ratio of the weighted OFDM signal power value DF1 of the branch 1 and the weighted OFDM signal power value DF2 of the branch 2 by the maximum ratio combining method to output a combined demodulated signal DD.

The noise amount calculation circuit 24-1 calculates the amount of noise DG1 of the branch 1 from the relative variance integral of the demapped value of the data carrier signal of the branch 1 with respect to the demapping reference value, the variance integral of the channel estimation signal of the branch 1, or the variance integral of the AC (Auxiliary Channel) and TMCC (Transmission and Multiplexing Configuration Control) signals of the branch 1.

The noise amount calculation circuit 24-2 calculates the amount of noise DG2 of the branch 2 from the relative, variance integral of the demapped value of the data carrier signal of the branch 2 with respect to the demapping reference value, the variance integral of the channel estimation signal of the branch 2, or the variance integral of the AC and TMCC signals of the branch 2.

The noise amount comparison circuit 25 compares the amounts of noise DG1, DG2 of the branches 1, 2 and outputs the results of comparison of noise amounts DH. The weighting coefficient calculation circuit 26 calculates the weighting coefficients DE1, DE2 given to the weighting circuits 22-1, 22-2 from the amounts of noise DG1, DG2 of the branches 1, 2 and the results of comparison of noise amounts DH.

In the first embodiment of the present invention, the noise amount calculation circuits 24-1, 24-2, noise amount comparison circuit 25, and weighting coefficient calculation circuit 26 configure a weighting coefficient supply circuit. The weighting coefficient calculation circuit 26 outputs as weighting coefficients DE1, DE2 values corresponding to amounts of noise DG1, DG2 so that when the combined value calculation circuit 23 combines the OFDM demodulated signals DC1, DC2 of the branches 1, 2 by the maximum ratio combining method, the greater the amount of noise of the branch of the OFDM demodulated signal among the branches 1, 2, the smaller the combining ratio.

In the first embodiment of the present invention configured in this way, the power calculation circuit 21-1 calculates the OFDM signal power value DB1 of the branch 1, while the power calculation circuit 21-2 calculates the OFDM signal power value DB2 of the branch 2.

Further, the noise amount calculation circuit 24-1 calculates the amount of noise DG1 of the branch 1, while the noise amount calculation circuit 24-2 calculates the amount of noise DG2 of the branch 2. Further, the noise amount comparison circuit 25 compares the amounts of noise DG1, DG2 of the branches 1, 2, while the weighting coefficient calculation circuit 26 calculates the weighting coefficients DE1, DE2 from the amounts of noise DG1, DG2 of the branches 1, 2 and the results of comparison of noise amounts DH.

Further, the weighting circuit 22-1 multiplies the OFDM signal power value DB1 of the branch 1 with the weighting coefficient DE1 to calculate the weighted OFDM signal power value DF1 of the branch 1, while the weighting circuit 22-2 multiplies the OFDM signal power value DB2 of the branch 2 with the weighting coefficient DE2 to calculate the weighted OFDM signal power value DF2 of the branch 2.

Further, the combined value calculation circuit 23 combines the OFDM demodulated signal DC1 of the branch 1 and the OFDM demodulated signal DC2 of the branch 2 in accordance with the ratio of the weighted OFDM signal power value DF1 of the branch 1 and the weighted OFDM signal power value DF2 of the branch 2 by the maximum ratio combining method to output a combined demodulated signal DD.

Here, the weighting coefficient calculation circuit 26 outputs as the weighting coefficients DE1, DE2 values so that when the combined value calculation circuit 23 combines the OFDM demodulated signals DC1, DC2 of the branches 1, 2 by the maximum ratio combining method, the greater the amount of noise of the branch of the OFDM demodulated signal among the branches 1, 2, the smaller the combining ratio, so can reduce the combined amount of the OFDM demodulated signal degraded due to noise when the combined value calculation circuit 23 combines the OFDM demodulated signals DC1, DC2 of the branches 1, 2.

In the above way, according to the first embodiment of the diversity receiver according to the present invention, the OFDM demodulated signals DC1, DC2 of the branches 1, 2 are combined so that the greater the amount of noise of a branch of a OFDM demodulated signal, the smaller the combining ratio, so it is possible to reduce the combined amount of an OFDM demodulated signal degraded due to noise and improve the reception performance of a diversity receiver having two branches.

### SECOND EMBODIMENT

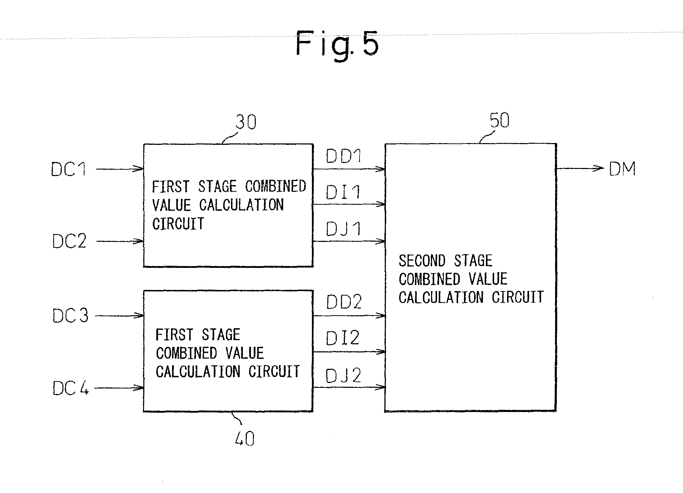

Figure 5 is a block circuit diagram showing principal parts of a second embodiment of a diversity receiver according to the present invention. The second embodiment of the present invention is used for an OFDM receiver having four branches (branch 1 to branch 4) and is provided with first stage combined value calculation circuits 30, 40 and a second stage combined value calculation circuit 50.

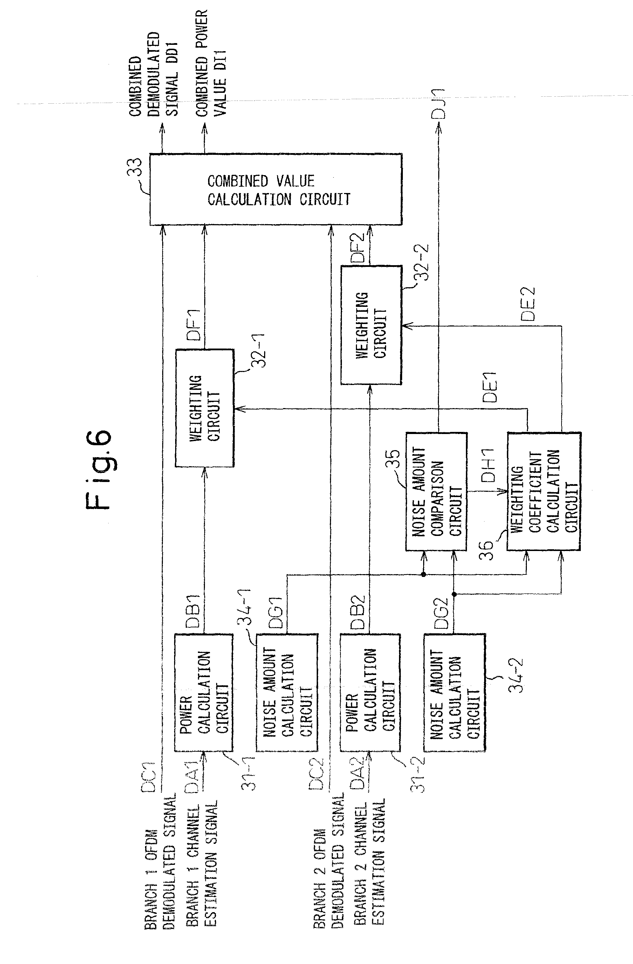

Figure 6 is a block circuit diagram showing principal parts of the first stage combined value calculation circuit 30. The first stage combined value calculation circuit 30 is provided with power calculation circuits 31-1, 31-2, weighting circuits 32-1, 32-2, a combined value calculation circuit 33, noise amount calculation circuits 34-1, 34-2, a noise amount comparison circuit 35, and a weighting coefficient calculation circuit 36.

The power calculation circuit 31-1 calculates the OFDM signal power value DB1 of the branch 1 based on the channel estimation signal DA1 of the branch 1. The power calculation circuit 31-2 calculates the OFDM signal power value DB2 of the branch 2 based on the channel estimation signal DA2 of the branch 2.

The weighting circuit 32-1 multiplies the OFDM signal power value DB1 of the branch 1 with the weighting coefficient DE1 so as to calculate a weighted OFDM signal power value DF1 of the branch 1. The weighting circuit 32-2 multiplies the OFDM signal power value DB2 of the branch 2 with the weighting coefficient DE2 so as to calculate a weighted OFDM signal power value DF2 of the branch 2.

The combined value calculation circuit 33 combines the OFDM demodulated signal DC1 of the branch 1 and the OFDM demodulated signal DC2 of the branch 2 in accordance with the ratio of the weighted OFDM signal power value DF1 of the branch 1 and the weighted OFDM signal power value DF2 of the branch 2 by the maximum ratio combining method to output a combined demodulated signal DD1 and outputs a power value (combined power value) DI1 of the combined demodulated signal DD1.

The noise amount calculation circuit 34-1 calculates the amount of noise DG1 of the branch 1 from the relative variance integral of the demapped value of the data carrier signal of the branch 1 with respect to the demapping reference value, the variance integral of the channel estimation signal of the branch 1, or the variance integral of the AC and TMCC signals of the branch 1.

The noise amount calculation circuit 34-2 calculates the amount of noise DG2 of the branch 1 from the relative variance integral of the demapped value of the data carrier signal of the branch 2 with the demapping reference value, the variance integral of the channel estimation signal of the branch 2, or the variance integral of the AC and TMCC signals of the branch 2.

The noise amount comparison circuit 35 compares the amounts of noise DG1, DG2 of the branches 1, 2 and outputs the results of comparison of noise amounts DH1 and outputs the smaller amount of noise in the amounts of noise DG1, DG2 of the branches 1, 2 as the amount of noise DJ1.

The weighting coefficient calculation circuit 36 calculates the weighting coefficients DE1, DE2 given to the weighting circuits 32-1, 32-2 from the amounts of noise DG1, DG2 of the branches 1, 2 and the results of comparison of noise amounts DH1.

In the first stage combined value calculation circuit 30, the noise amount calculation circuits 34-1, 34-2, the noise amount comparison circuit 35, and the weighting coefficient calculation circuit 36 configure a weighting coefficient supply circuit. The weighting coefficient calculation circuit 36 outputs as the weighting coefficients DE1, DE2 values in accordance with the amounts of noise DG1, DG2 so that when the combined value calculation circuit 33 combines the OFDM demodulated signals DC1, DC2 of the branches 1, 2 by the maximum ratio combining method, the greater the amount of noise of the branch of the OFDM demodulated signal in the branches 1, 2, the smaller the combining ratio.

In the thus configured first stage combined value calculation circuit 30, the power calculation circuit 31-1 calculates the OFDM signal power value DB1 of the branch 1, while the power calculation circuit 31-2 calculates the OFDM signal power value DB2 of the branch 2.

Further, the noise amount calculation circuit 34-1 calculates the amount of noise DG1 of the branch 1, while the noise amount calculation circuit 34-2 calculates the amount of noise DG2 of the branch 2. Further, the noise amount comparison circuit 35 compares the amounts of noise DG1, DG2 of the branches 1, 2, while the weighting coefficient calculation circuit 36 calculates the weighting coefficients DE1, DE2 from the amounts of noise DG1, DG2 of the branches 1, 2 and the results of comparison of noise amounts DH1.

Further, the weighting circuit 32-1 multiplies the OFDM signal power value DB1 of the branch 1 with the weighting coefficient DE1 to calculate a weighted OFDM signal power value DF1 of the branch 1, while the weighting circuit 32-2 multiplies the OFDM signal power value DB2 of the branch 2 with a weighting coefficient DE2 to calculate a weighted OFDM signal power value DF2 of the branch 2.

Further, the combined value calculation circuit 33 combines the OFDM demodulated signal DC1 of the branch 1 and the OFDM demodulated signal DC2 of the branch 2 in accordance with the ratio of the weighted OFDM signal power value DF1 of the branch 1 and weighted OFDM signal power value DF2 of the branch 2 by the maximum ratio combining method to output a combined demodulated signal DD1 and outputs a combined power value DI1.

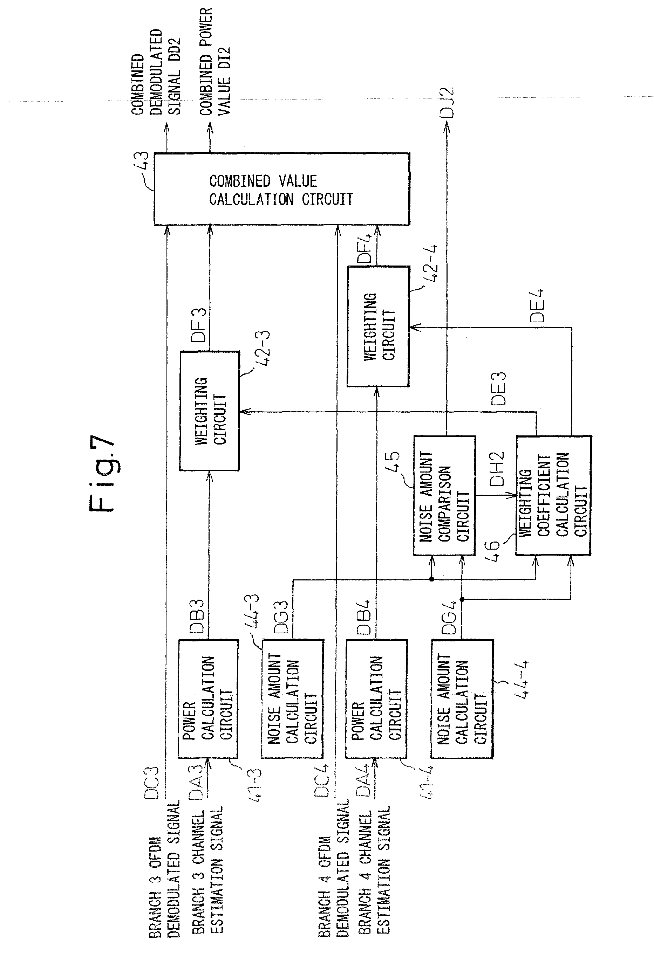

Figure 7 is a block circuit diagram showing principal parts of the first stage combined value calculation circuit 40. The first stage combined value calculation circuit 40 is provided with power calculation circuits 41-3, 41-4, weighting circuits 42-3, 42-4, a combined value calculation circuit 43, noise amount calculation circuits 44-3, 44-4, a noise amount comparison circuit 45, and a weighting coefficient calculation circuit 46.

The power calculation circuit 41-3 calculates the OFDM signal power value DB3 of the branch 3 based on the channel estimation signal DA3 of the branch 3. The power calculation circuit 41-4 calculates the OFDM signal power value DB4 of the branch 4 based on the channel estimation signal DA4 of the branch 4.

The weighting circuit 42-3 multiplies the OFDM signal power value DB3 of the branch 3 with the weighting coefficient DE3 to calculate the weighted OFDM signal power value DF3 of the branch 3. The weighting circuit 42-4 multiplies the OFDM signal power value DB4 of the branch 4 with the weighting coefficient DE4 to calculate the weighted OFDM signal power value DF4 of the branch 4.

The combined value calculation circuit 43 combines the OFDM demodulated signal DC3 of the branch 3 and the OFDM demodulated signal DC4 of the branch 4 in accordance with the ratio of the weighted OFDM signal power value DF3 of the branch 3 and the weighted OFDM signal power value DF4 of the branch 4 by the maximum ratio combining method to output a combined demodulated signal DD2 and outputs the power value (combined power value) DI2 of the combined demodulated signal DD2.

The noise amount calculation circuit 44-3 calculates the amount of noise DG3 of the branch 3 from the relative variance integral of the demapped value of the data carrier signal of the branch 3 with respect to the demapping reference value, the variance integral of the channel estimation signal of the branch 3, or the variance integral of the AC and TMCC signal of the branch 3.

The noise amount calculation circuit 44-4 calculates the amount of noise DG4 of the branch 4 from the relative variance integral of the demapped value of the data carrier signal of the branch 4 with respect to the demapping reference value, the variance integral of the channel estimation signal of the branch 4, or the variance integral of the AC and TMCC signal of the branch 4.

The noise amount comparison circuit 45 compares the amounts of noise DG3, DG4 of the branches 3, 4 to output the results of comparison of noise amounts DH2 and outputs the smaller amount of noise in the amounts of noise DG3, DG4 of the branches 3, 4 as the amount of noise DJ2.

The weighting coefficient calculation circuit 46 calculates the weighting coefficients DE3, DE4 to be given to the weighting circuits 42-3, 42-4 from the amounts of noise DG3, DG4 of the branches 3, 4 and the results of comparison of noise amounts DH2.

In the first stage combined value calculation circuit 40, the noise amount calculation circuits 44-3, 44-4, noise amount comparison circuit 45, and weighting coefficient calculation circuit 46 configure a weighting coefficient supply circuit. The weighting coefficient calculation circuit 46 outputs as the weighting coefficients DE3, DE4 values corresponding to the amounts of noise DG3, DG4 so that when the combined value calculation circuit 43 combines the OFDM demodulated signals DC3, DC4 of the branches 3, 4 by the maximum ratio combining method, the combining ratio of the OFDM demodulated signal of the branch with the greater amount of noise in the branches 3, 4 becomes smaller.

In the second stage combined value calculation circuit 40 configured in this way, the power calculation circuit 41-3 calculates the OFDM signal power value DB3 of the branch 3, while the power calculation circuit 41-4 calculates the OFDM signal power value DB4 of the branch 4.

Further, the noise amount calculation circuit 44-3 calculates the amount of noise DG3 of the branch 3, while the noise amount calculation circuit 44-4 calculates the amount of noise DG4 of the branch 4. Further, the noise amount comparison circuit 45 compares the amounts of noise DG3, DG4 of the branches 3, 4, while the weighting coefficient calculation circuit 46 calculates the weighting coefficients DE3, DE4 from the amounts of noise DG3, DG4 of the branches 3, 4 and the results of comparison of the noise amounts DH2.

Further, the weighting circuit 42-3 multiplies the OFDM signal power value DB3 of the branch 3 with the weighting coefficient DE3 to calculate a weighted OFDM signal power value DF3 of the branch 3, while the weighting circuit 42-4 multiplies the OFDM signal power value DB4 of the branch 4 with the weighting coefficient DE4 to calculate a weighted OFDM signal power value DF4 of the branch 4.

Further, the combined value calculation circuit 43 combines the OFDM demodulated signal DC3 of the branch 3 and the OFDM demodulated signal DC4 of the branch 4 in accordance with the weighted OFDM signal power value DF3 of the branch 3 and the weighted OFDM signal power value DF4 of the branch 4 by the maximum ratio combining method to output a combined demodulated signal DD2 and outputs a combined power value DI2.

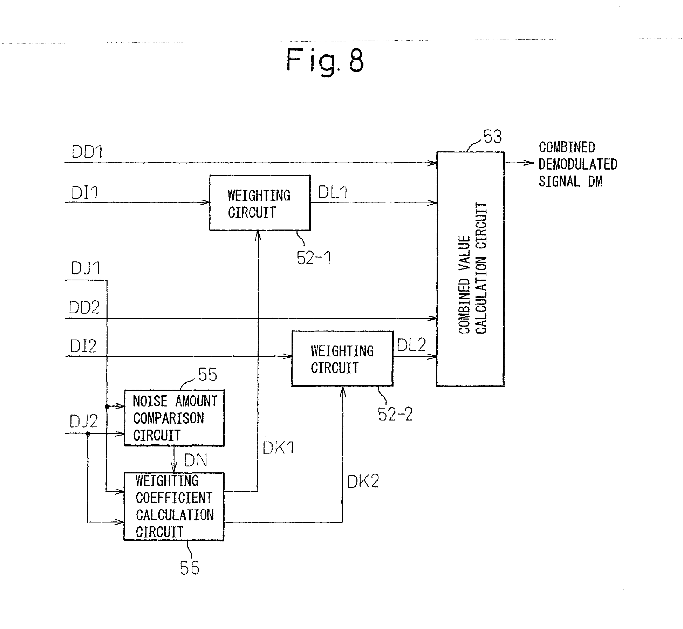

Figure 8 is a block circuit diagram showing principal parts of a second stage combined value calculation circuit 50. The second stage combined value calculation circuit 50 is provided with weighting circuits 52-1, 52-2, a combined value calculation circuit 53, a noise amount comparison circuit 55, and a weighting coefficient calculation circuit 56.

The weighting circuit 52-1 multiplies the combined power value DI1 output by the combined value calculation circuit 33 of the first stage combined value calculation circuit 30 with the weighting coefficient DK1 to calculate a weighted combined power value DL1. The weighting circuit 52-2 multiplies the combined power value DI2 output by the combined value calculation circuit 43 of the first stage combined value calculation circuit 40 with the weighting coefficient DK2 to calculate a weighted combined power value DL2.

The combined value calculation circuit 53 combines the combined demodulated signal DD1 output by the combined value calculation circuit 33 of the first stage combined value calculation circuit 30 and the combined demodulated signal DD2 output by the combined value calculation circuit 43 of the second stage combined value calculation circuit 40 in accordance with the ratio of the weighted combined power value DL1 and the weighted combined power value DL2 by the maximum ratio combining method to output a combined demodulated signal DM.

The noise amount comparison circuit 55 compares the amount of noise DJ1 output by the noise amount comparison circuit 35 of the first stage combined value calculation circuit 30 and the amount of noise DJ2 output by the noise amount comparison circuit 45 of the first stage combined value calculation circuit 40 and outputs the results of comparison of noise amounts DN.

The weighting coefficient calculation circuit 56 calculates the weighting coefficients DK1, DK2 to be given to the weighting circuits 52-1, 52-2 from the amount of noise DJ1 output by the noise amount comparison circuit 35 of the first stage combined value calculation circuit 30, the amount of noise DJ2 output by the noise amount comparison circuit 45 of the first stage combined value calculation circuit 40, and the results of comparison of noise amounts DN output by the noise amount comparison circuit 55.

In the second stage combined value calculation circuit 50, the noise amount comparison circuit 55 and the weighting coefficient calculation circuit 56 configure a weighting coefficient supply circuit. The weighting coefficient calculation circuit 56 outputs as the weighting coefficients DK1, DK2 values in accordance with the amounts of noise DJ1, DJ2 so that when the combined value calculation circuit 53 combines the combined demodulated signals DD1, DD2 by the maximum ratio combining method, the combining ratio of the combined demodulated signal output by the first stage combined value calculation circuit outputting the greater amount of noise among the amounts of noise DJ1, DJ2 becomes smaller.

In the second stage combined value calculation circuit 50 configured in this way, the noise amount comparison circuit 55 compares the amount of noise DJ1 output by the noise amount comparison circuit 35 of the first stage combined value calculation circuit 30 and the amount of noise DJ2 output by the noise amount comparison circuit 45 of the first stage combined value calculation circuit 40, while the weighting coefficient calculation circuit 56 calculates the weighting coefficients DK1, DK2 from the amounts of noise DJ1, and the results of comparison of noise amounts DN.

Further, the weighting circuit 52-1 multiplies the combined power value DI1 output by the combined value calculation circuit 33 of the first stage combined value calculation circuit 30 with the weighting coefficient DK1 to calculate a weighted combined power value DL1, while the weighting circuit 52-2 multiplies the combined power value DI2 output by the combined value calculation circuit 43 of the first stage combined value calculation circuit 40 to calculate a weighted combined power value DL2.

Further, the combined value calculation circuit 53 combines the combined demodulated signal DD1 output by the combined value calculation circuit 33 of the first stage combined value calculation circuit 30 and the combined demodulated signal DD2 output by the combined value calculation circuit 43 of the first stage combined value calculation circuit 40 in accordance with the ratio of the weighted combined power value DL1 and weighted combined power value DL2 by the maximum ratio combining method to output a combined demodulated signal DM.

In the above way, in the second embodiment of the present invention, the first stage combined value calculation circuit 30 combines the OFDM demodulated signal DC1 of the branch 1 and the OFDM demodulated signal DC2 of the branch 2 in accordance with the ratio of the weighted OFDM signal power value DF1 of the branch 1 and the weighted OFDM signal power value DF2 of the branch 2 by the maximum ratio combining method to calculate a combined demodulated signal DD1.

Further, the first stage combined value calculation circuit 40 combines the OFDM demodulated signal DC3 of the branch 3 and the OFDM demodulated signal DC4 of the branch 4 in accordance with the ratio of the weighted OFDM signal power value DF3 of the branch 3 and the weighted OFDM signal power value DF4 of the branch 4 by the maximum ratio combining method to calculate a combined demodulated signal DD2.

Further, the second stage combined value calculation circuit 50 combines the combined demodulated signal DD1 output by the combined value calculation circuit 33 of the first stage combined value calculation circuit 30 and the combined demodulated signal DD2 output by the combined value calculation circuit 43 of the first stage combined value calculation circuit 40 in accordance with the ratio of the weighted combined power value DL1 and the weighted combined power value DL2 by the maximum ratio combining method to calculate a combined demodulated signal DM.

Here, the weighting coefficient calculation circuit 36 calculates as the weighting coefficients DE1, DE2 values so that when the combined value calculation circuit 33 combines the OFDM demodulated signals DC1, DC2 of the branches 1, 2 by the maximum ratio combining method, the combining ratio of the OFDM demodulated signal of the branch with the greater amount of noise among the branches 1, 2 becomes smaller.

Further, the weighting coefficient calculation circuit 46 outputs as the weighting coefficients DE3, DE4 values so that when the combined value calculation circuit 43 combines the OFDM demodulated signals DC3, DC4 of the branches 3, 4 by the maximum ratio combining method, the combining ratio of the OFDM demodulated signal of the branch with the greater amount of noise among the branches 3, 4 becomes smaller.

Further, the weighting coefficient calculation circuit 56 outputs as the weighting coefficients DK1, DK2 values so that when the combined value calculation circuit 53 combines the combined demodulated signals DD1, DD2 by the maximum ratio combining method, the combined ratio of the combined demodulated signal output by the first stage combined value calculation circuit outputting the greater amount of noise among the amounts of noise DJ1, DJ2 becomes smaller.

Therefore, according the second embodiment of the diversity receiver according to the present invention, the OFDM demodulated signals DC1 to DC4 of the branches 1 to 4 are combined so that the greater the amount of noise of a branch of a demodulated signal, the smaller the combining ratio, so it is possible to reduce the combined amount of the demodulated signal degraded due to noise and improve the reception performance of a diversity receiver having four branches.

Here, in the second embodiment of the present invention, the explanation was given taking as an example a diversity receiver provided with two first stage combined value calculation circuits and one second stage combined value calculation circuit, but the present invention may also be applied to a case of configuring a diversity receiver provided with three or more first stage combined value calculation circuits and one second stage combined value calculation circuit or a diversity receiver provided with four or more first stage combined value calculation circuits and a rear stage combined value calculation circuit comprised of two or more layers at the rear of the same.

Further, in the second embodiment of the present invention, the second stage combined value calculation circuits 50, 90 were configured to combine the combined demodulated signals DD1, DD2 considering the amount of noise, but the second stage combined value calculation circuit may also be configured in the same way as the past. In this case, the noise amount comparison circuits 35, 45 of the first stage combined value calculation circuits 30, 40, 70, 80 do not have to be configured to output the amounts of noise DJ1, DJ2.

### THIRD EMBODIMENT

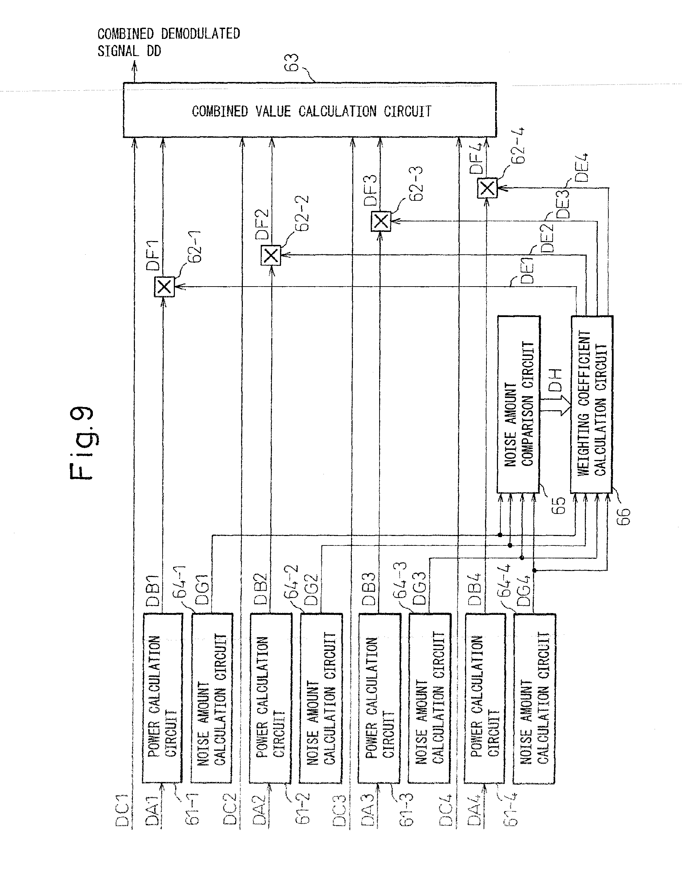

Figure 9 is a block circuit diagram showing principal parts of a third embodiment of a diversity receiver according to the present invention. The third embodiment of the present invention is used for an OFDM receiver having four branches (branch 1 to branch 4) and is provided with power calculation circuits 61-1 to 61-4, weighting circuits 62-1 to 62-4, a combined value calculation circuit 63, noise amount calculation circuits 64-1 to 64-4, a noise amount comparison circuit 65, and a weighting coefficient calculation circuit 66.

The power calculation circuit 61-1 calculates the OFDM signal power value DB1 of the branch 1 based on the channel estimation signal DA1 of the branch 1. The power calculation circuit 61-2 calculates the OFDM signal power value DB2 of the branch 2 based on the channel estimation signal DA2 of the branch 2.

The power calculation circuit 61-3 calculates the OFDM signal power value DB3 of the branch 3 based on the channel estimation signal DA3 of the branch 3. The power calculation circuit 61-4 calculates the OFDM signal power value DB4 of the branch 4 based on the channel estimation signal DA4 of the branch 4.

The weighting circuit 62-1 multiplies the OFDM signal power value DB1 of the branch 1 with the weighting coefficient DE1 to calculate a weighted OFDM signal power value DF1 of the branch 1. The weighting circuit 62-2 multiplies the OFDM signal power value DB2 of the branch 2 with the weighting coefficient DE2 to calculate a weighted OFDM signal power value DF2 of the branch 2.

The weighting circuit 62-3 multiplies the OFDM signal power value DB3 of the branch 3 with the weighting coefficient DE3 to calculate a weighted OFDM signal power value DF3 of the branch 3. The weighting circuit 62-4 multiplies the OFDM signal power value DB4 of the branch 4 with the weighting coefficient DE4 to calculate a weighted OFDM signal power value DF4 of the branch 4.

The combined value calculation circuit 63 combines the OFDM demodulated signal DC1 of the branch the OFDM demodulated signal DC2 of the branch 2, the OFDM demodulated signal DC3 of the branch 3, and the OFDM demodulated signal DC4 of the branch 4 in accordance with the ratio of the weighted OFDM signal power value DF1 of the branch 1, the weighted OFDM signal power value DF2 of the branch 2, the weighted OFDM signal power value DF3 of the branch 3, and the weighted OFDM signal power value DF4 of the branch 4 by the maximum ratio combining method to calculate a combined demodulated signal DD.

The noise amount calculation circuit 64-1 calculates the amount of noise DG1 of the branch 1 from the relative variance integral of the demapped value of the data carrier signal of the branch 1 with respect to the demapping reference value, the variance integral of the channel estimation signal of the branch 1, or the variance integral of the AC and TMCC signal of the branch 1.

The noise amount calculation circuit 64-2 calculates the amount of noise DG2 of the branch 2 from the relative variance integral of the demapped value of the data carrier signal of the branch 2 with respect to the demapping reference value, the variance integral of the channel estimation signal of the branch 2, or the variance integral of the AC and TMCC signal of the branch 2.

The noise amount calculation circuit 64-3 calculates the amount of noise DG3 of the branch 3 from the relative variance integral of the demapped value of the data carrier signal of the branch 3 with respect to the demapping reference value, the variance integral of the channel estimation signal of the branch 3, or the variance integral of the AC and TMCC signal of the branch 3.

The noise amount calculation circuit 64-4 calculates the amount of noise DG4 of the branch 4 from the relative variance integral of the demapped value of the data carrier signal of the branch 4 with respect to the demapping reference value, the variance integral of the channel estimation signal of the branch 4, or the variance integral of the AC and TMCC signal of the branch 4.

The noise amount comparison circuit 65 compares the amounts of noise DG1 to DG4 of the branches 1 to 4 and outputs the results of comparison of noise amounts DH. The weighting coefficient calculation circuit 66 calculates the weighting coefficients DE1 to DE4 to be given to the weighting circuits 62-1 to 62-4 from the amounts of noise DG1 to DG4 of the branches 1 to 4 and the results of comparison of the noise amounts DH.

In the third embodiment of the present invention, the noise amount calculation circuit 64-1 to 64-4, the noise amount comparison circuit 65, and the weighting coefficient calculation circuit 66 configure a weighting coefficient supply circuit. The weighting coefficient calculation circuit 66 outputs as the weighting coefficients DE1 to DE4 values in accordance with the amounts of noise DG1 to DG4 so that when the combined value calculation circuit 63 combines the OFDM demodulated signals DC1 to DC4 of the branches 3 to 4 by the maximum ratio combining method, the greater the amount of noise of the branch of the OFDM demodulated signal among the branches 1 to 4, the smaller the combining ratio.

In the third embodiment of the present invention configured in this way, the power calculation circuit 61-1 calculates the OFDM signal power value DB1 of the branch 1, the power calculation circuit 61-2 calculates the OFDM signal power value DB2 of the branch 2, the power calculation circuit 61-3 calculates the OFDM signal power value DB3 of the branch 3, and the power calculation circuit 61-4 calculates the OFDM signal power value DB4 of the branch 4.

On the other hand, the noise amount calculation circuit 64-1 calculates the amount of noise DG1 of the branch 1, the noise amount calculation circuit 64-2 calculates the amount of noise DG2 of the branch 2, the noise amount calculation circuit 64-3 calculates the amount of noise DG3 of the branch 3, and the noise amount calculation circuit 64-4 calculates the amount of noise DG4 of the branch 4.

Further, the noise amount comparison circuit 65 compares the amounts of noise DG1 to DG4 of the branches 1 to 4, while the weighting coefficient calculation circuit 66 calculates the weighting coefficients DF1 to DE4 from the amounts of noise DG1 to DG4 of the branches 1 to 4 and the results of comparison of noise amounts DH.

Further, the weighting circuit 62-1 multiplies the OFDM signal power value DB1 of the branch 1 with the weighting coefficient DE1 to calculate a weighted OFDM signal power value DF1 of the branch 1, while the weighting circuit 62-2 multiplies the OFDM signal power value DB2 of the branch 2 with the weighting coefficient DE2 to calculate a weighted OFDM signal power value DF2 of the branch 2.

Further, the weighting circuit 62-3 multiplies the OFDM signal power value DB3 of the branch 3 with the weighting coefficient DE3 to calculate a weighted OFDM signal power value DF3 of the branch 3, while the weighting circuit 62-4 multiplies the OFDM signal power value DB4 of the branch 4 with the weighting coefficient DE4 to calculate a weighted OFDM signal power value DF4 of the branch 4.

Further, the combined value calculation circuit 63 combines the OFDM demodulated signal DC1 of the branch 1, the OFDM demodulated signal DC2 of the branch 2, the OFDM demodulated signal DC3 of the branch 3, and the OFDM demodulated signal DC4 of the branch 4 in accordance with the ratio of the weighted OFDM signal power value DF1 of the branch 1, the weighted OFDM signal power value DF2 of the branch 2, the weighted OFDM signal power value DF3 of the branch 3, and the weighted CFDM signal power value DF4 of the branch 4 by the maximum ratio combining method to calculate a combined demodulated signal DD.

Here, the weighting coefficient calculation circuit 66 outputs as the weighting coefficient DE1 to DE4 values so that when the combined value calculation circuit 63 combines the OFDM demodulated signals DC1 to DC4 of the branches 1 to 4 by the maximum ratio combining method, the greater the amount of noise of a branch of an OFDM demodulated signal among the branches 1 to 4, the smaller the combining ratio, so it is possible to reduce the combined amount of an OFDM demodulated signal degraded due to noise when the combined value calculation circuit 63 combines the OFDM demodulated signals DC1 to DC4 of the branches 1 to 4.

In this way, according to the third embodiment of the diversity receiver according to the present invention, the OFDM demodulated signals DC1 to DC4 of the branches 1 to 4 are combined so that the greater the amount of noise of a branch of a demodulated signal, the smaller the combining ratio, so it is possible to reduce the combined amount of a demodulated signal degraded due to noise and improve the reception performance of a diversity receiver having four branches.

### FOURTH EMBODIMENT

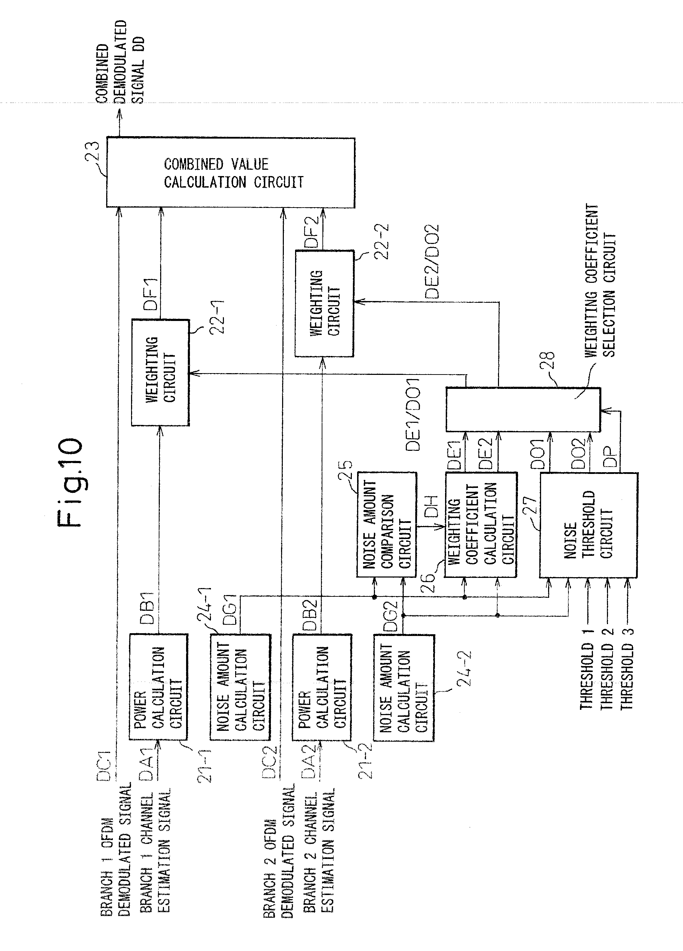

Figure 10 is a block circuit diagram showing principal parts of a fourth embodiment of a diversity receiver according to the present invention. The fourth embodiment of the present invention is used for an OFDM receiver having two branches (branch 1, branch 2) and is an improvement over the first embodiment of the present invention shown in Fig. 4.

In a fourth embodiment of the present invention, the noise threshold value circuit 27 and the weighting coefficient selection circuit 28 are provided. The noise threshold value circuit 27 receives as input the amounts of noise DG1, DG2 of the branches 1, 2 and the threshold value 1, threshold value 2, and threshold value 3 (where, threshold value 1<threshold value 2<threshold value 3) and outputs the weighting coefficients DO1, DO2 and weighting coefficient selection signal DP to the weighting coefficient selection circuit 28.

Here, the threshold value 1 is for example made the same value as the amount of noise when the CN ratio (ratio of carrier signal power and noise power) becomes the required value demanded at the time of reception in the single system when in the reception state of the single system.

Further, the threshold value 2 is for example made the same value as the amount of noise given to each branch when the same amount of noise is given to each branch and when the CN ratio becomes the required value demanded at the time of reception in the diversity system when in the reception state of the diversity system.

Further, the threshold value 3 is for example made the same value as the amount of noise when giving an amount of noise to one branch so that the CN ratio becomes a required value at the time of signal reception and giving an amount of noise to the other branch so that the CN ratio becomes the required value at the time of diversity reception when in the reception state of the diversity system.

The weighting coefficient selection circuit 28 selects the weighting coefficients DE1, DE2 output by the weighting coefficient calculation circuit 26 or the weighting coefficients DO1, DO2 output by the noise threshold value circuit 27 and gives them to the weighting circuits 22-1, 22-2. When the weighting coefficient selection signal DP=logic 1, it selects the weighting coefficients DE1, DE2, while when the weighting coefficient selection signal DP=logic 0, it selects the weighting coefficients DO1 , DO2. The rest is configured in the same way as the first embodiment of the present invention shown in Fig. 4.

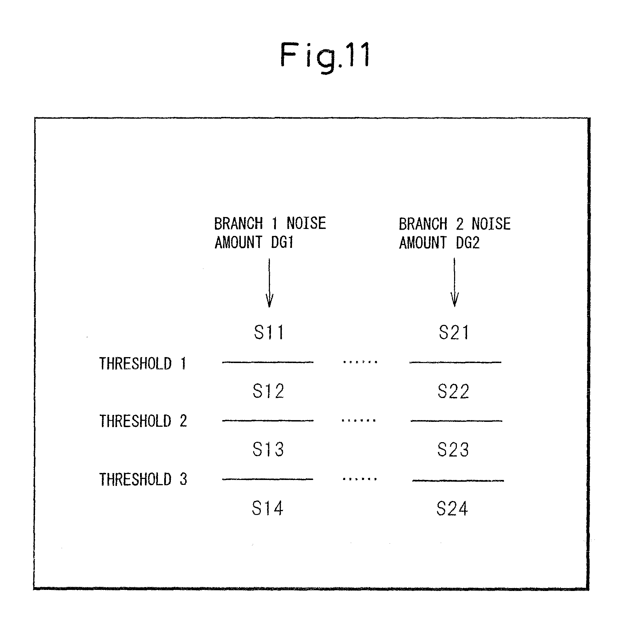

Figure 11 is a view for explaining the operation of the noise threshold value circuit 27. In. Fig. 11, S11, S12, S13, S14 show the state of the relative magnitude of the amount of noise DG1 of the branch 1 with respect to the threshold value 1 to threshold value 3, that is, S11 shows the state of the amount of noise DG1<threshold value 1, S12 shows the state of the threshold value 1≤amount of noise DG1<threshald value 2, S13 shows the state of the threshold value 2≤amount of noise DG1<threshold value 3, and S14 shows the state of the threshold value 3≤amount of noise DG1.

Further, S21, S22, S23, S24 show states of the relative magnitude of the amount of noise DG2 of the branch 2 with respect to the threshold value 1 to threshold value 3, that is, S21 shows the state of the amount of noise DG2<threshold value 1, S22 shows the state of the threshold value 1≤amount of noise DG2<threshold value 2, S23 shows the state of the threshold value 2≤amount of noise DG2<threshold value 3, and S24 shows the state of the threshold value 3≤amount of noise DG2.

Table 1 shows the relationship between the states of the values able to be taken by the amounts of noise DG1, DG2 of the branches 1, 2 and the values of the weighting coefficients DO1 DO2 output by the noise threshold value circuit 27.

**[Table 1]**

| DG1 | DG2 | DO1 | DO2 | DG1 | DG2 | DO1 | DO2 |
|---|---|---|---|---|---|---|---|
| S11 | S21 | 4 | 4 | S13 | S21 | 2 | 4 |
| | S22 | 4 | 3 | | S22 | 2 | 3 |
| | S23 | 4 | 2 | | S23 | 2 | 2 |
| | S24 | 4 | 1 | | S24 | 2 | 1 |
| S12 | S21 | 3 | 4 | S14 | S21 | 1 | 4 |
| | S22 | 3 | 3 | | S22 | 1 | 3 |
| | S23 | 3 | 2 | | S23 | 1 | 2 |
| | S24 | 3 | 1 | | S24 | 1 | 1 |

That is, the noise threshold value circuit 27 outputs as the weighting coefficient DO1 the value 4 when the amount of noise DG1 is S11, the value 3 when the amount of noise DG1 is S12, the value 2 when the amount of noise DG1 is S13, and the value 1 when the amount of noise DG1 is S14 and outputs as the weighting coefficient DO2 the value 4 when the amount of noise DG2 is S21, the value 3 when the amount of noise DG2 is S22, the value 2 when the amount of noise DG2 is S23, and the value 1 when the amount of noise DG2 is S24.

In this way, the noise threshold value circuit 27 outputs as the weighting coefficients DO1, DO2 preset fixed values in accordance with the relative magnitude of the amounts of noise DG1, DG2 with the threshold value 1 to threshold value 3. Further, the noise threshold value circuit 27 outputs as the weighting coefficient selection signal DP the logic 1 when the states of the amounts of noise DG1, DG2 are S11, S21 and outputs the logic 0 in other cases.

Note that in the fourth embodiment of the present invention, the noise amount calculation circuits 24-1, 24-2, noise amount comparison circuit 25, weighting coefficient calculation circuit 26, noise threshold value circuit 27, and weighting coefficient selection circuit 28 configure a weighting coefficient supply circuit.

In the fourth embodiment of the present invention configured in this way, when the amounts of noise DG1, DG2 are S11, S21, the weighting circuits 22-1, 22-2 are given the weighting coefficients DE1, DE2 output by the weighting coefficient calculation circuit 26, so the fourth embodiment of the present invention operates in the same way as the case of the first embodiment of the present invention and the same effects as the case of the first embodiment of the present invention can be obtained.

As opposed to this, when the amounts of noise DG1, DG2 are other than S11, S21, the weighting circuits 22-1, 22-2 are given the weighting coefficients DO1, DO2 output by the noise threshold value circuit 27.

Here, when the states of the amounts of noise DG1, DG2 with respect to the threshold value 1, threshold value 2, threshold value 3 differ, even if giving weighting coefficients DE1, DE2 corresponding to the results of comparison of noise amounts DH of the amounts of noise DG1, DG2 to the weighting circuit 22-1, 22-2 like in the case of the first embodiment of the present invention, it is not possible to effectively reduce the combined amount of a demodulated signal degraded due to noise, but when giving fixed value weighting coefficients DO1, DO2 to the weighting circuits 22-1, 22-2 like in the fourth embodiment of the present invention, it is possible to effectively reduce the combined amount of a demodulated signal degraded due to noise depending on the method of setting the fixed values.

In the above way, according to the fourth embodiment of the diversity receiver according to the present invention, the OFDM demodulated signals DC1, DC2 of the branches 1, 2 are combined so that the greater the amount of noise of a branch of a demodulated signal, the smaller the combining ratio, so it is possible to reduce the combined amount of a demodulated signal degraded due to noise and improve the reception performance of a diversity receiver having two branches.

Here, in the fourth embodiment of the present invention, like with the above-mentioned second embodiment, the explanation was given taking as an example a diversity receiver provided with two first stage combined value calculation circuits and one second stage combined value calculation circuit, but the present invention may also be applied to a case of configuring a diversity receiver provided with three or more first stage combined value calculation circuits and one second stage combined value calculation circuit or a diversity receiver provided with four or more first stage combined value calculation circuits and a rear stage combined value calculation circuit comprised of two or more layers at the rear or the same.

Further, in the fourth embodiment of the present invention, the second stage combined value calculation circuits 50, 90 were configured to combine the combined demodulated signals DD1, DD2 considering the amounts of noise, but the second stage combined value calculation circuit may also be configured like in the past. In this case, the noise amount comparison circuits 35, 45 of the first stage combined value calculation circuits 30, 40, 70, 80 do not have to be configured to output the amounts of noise DJ1, DJ2.

### FIFTH EMBODIMENT

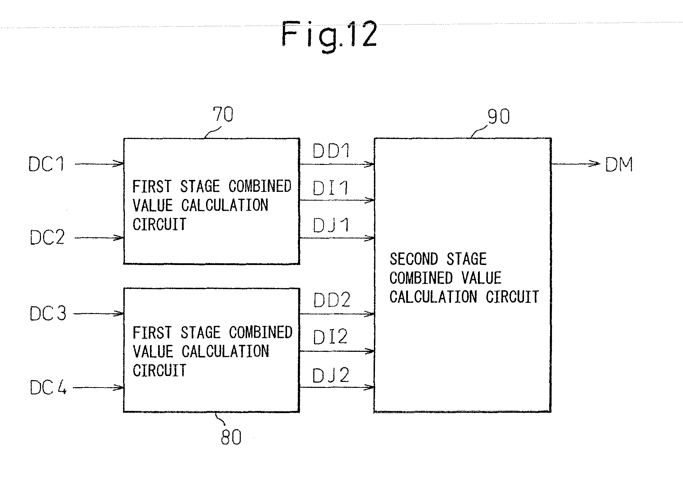

Figure 12 is a block circuit diagram showing principal parts of a fifth embodiment of a diversity receiver according to the present invention. The fifth embodiment of the present invention is used for an OFDM receiver having four branches (branch 1 to branch 4) and is provided with first stage combined value calculation circuits 70, 80 and a second stage combined value calculation circuit 90 improved over the first stage combined value calculation circuits 30, 40 and second stage combined value calculation circuit 50 provided in the second embodiment of the present invention shown in Fig. 5.

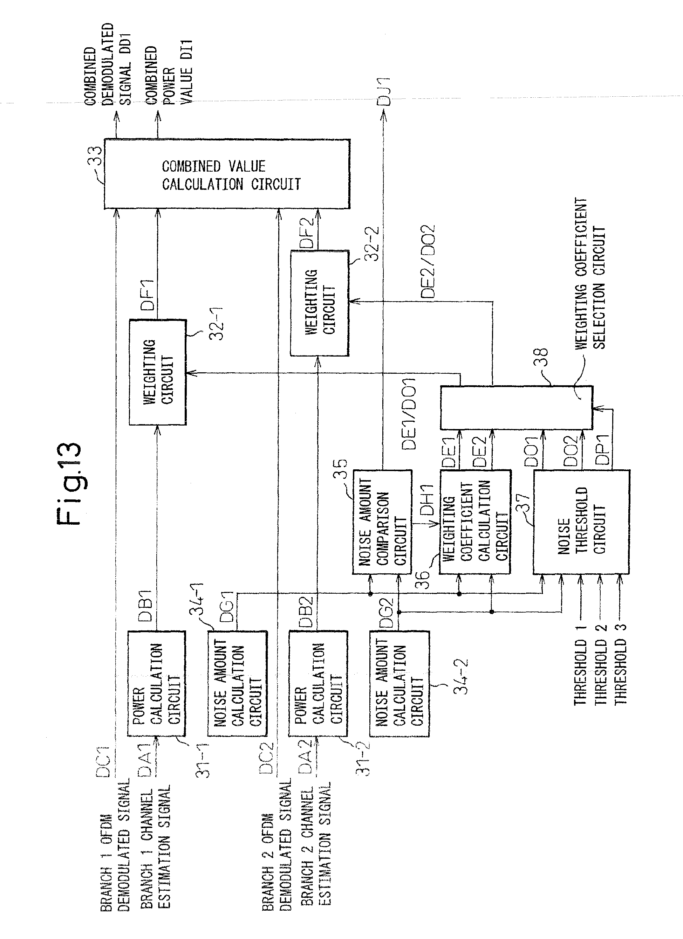

Figure 13 is a block circuit diagram showing principal parts of the first stage combined value calculation circuit 70. The first stage combined value calculation circuit 70 is provided with a noise threshold value circuit 37 and a weighting coefficient selection circuit 38. The noise threshold value circuit 37 receives as input the amounts of noise DG1, DG2 of the branches 1, 2 and the threshold value 1, threshold value 2, and threshold value 3 (where, threshold value 1<threshold value 2<threshold value 3) and outputs the weighting coefficient DO1, DO2 and weighting coefficient selection signal DP1 to the weighting coefficient selection circuit 38. It operates in the same way as the noise threshold value circuit 27 provided in the fourth embodiment of the present invention.

The weighting coefficient selection circuit 38 selects the weighting coefficients DE1, DE2 output by the weighting coefficient calculation circuit 36 or the weighting coefficients DO1, DO2 output by the noise threshold value circuit 37 and gives them to the weighting circuits 32-1, 32-2. When the weighting coefficient selection signal DP1=logic 1, it selects the weighting coefficients DE1, DE2, while when the weighting coefficient selection signal DP1=logic 0, it selects the weighting coefficients DO1, DO2. The rest is configured in the same way as the first stage combined value calculation circuit 30 shown in Fig. 6.

Note that in the first stage combined value calculation circuit 70, the noise amount calculation circuits 34-1, 34-2, noise amount comparison circuit 35, weighting coefficient calculation circuit 36, noise threshold value circuit 37, and weighting coefficient selection circuit 38 configure a weighting coefficient supply circuit.

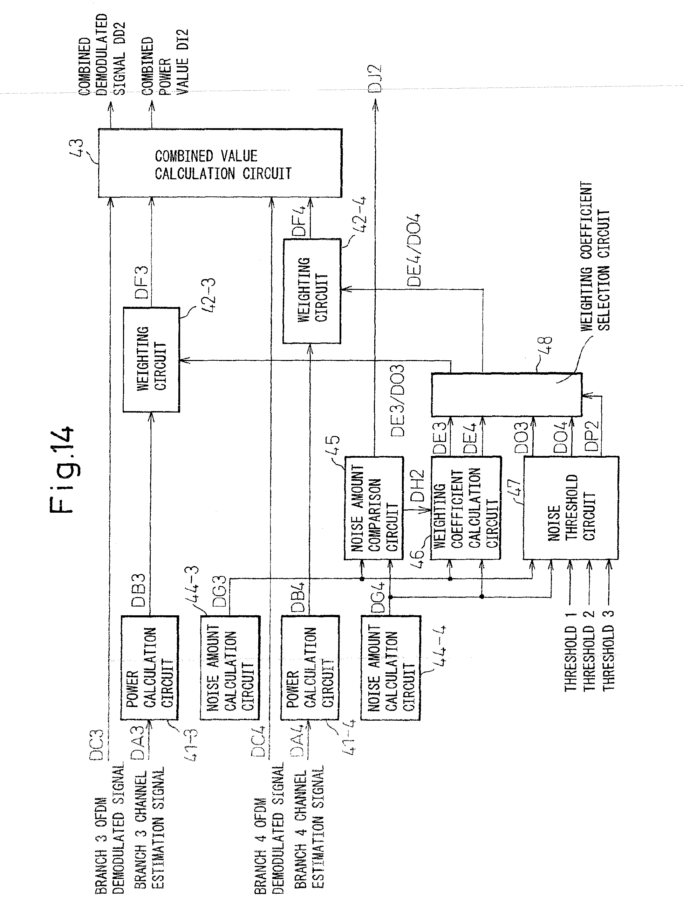

Figure 14 is a block circuit diagram showing principal parts of the first stage combined value calculation circuit 80. The first stage combined value calculation circuit 80 is provided with a noise threshold value circuit 47 and weighting coefficient selection circuit 48. The noise threshold value circuit 47 receives as input the amounts of noise DG3, DG4 of the branches 3, 4 and the threshold value 1, threshold value 2, threshold value 3 and outputs the weighting coefficients DO3, DO4 and weighting coefficient selection signal DP2 to the weighting coefficient selection circuit 48. It operates the same way as the noise threshold value circuit 27 provided in the first embodiment of the present invention fer the amounts of noise DG3, DG4.

The weighting coefficient selection circuit 48 selects the weighting coefficients DE3, DE4 output by the weighting coefficient calculation circuit 46 or the weighting coefficients DO3, DO4 output by the noise threshold value circuit 47 and gives them to the weighting circuits 42-3, 42-4. When the weighting coefficient selection signal DP2=logic 1, it selects the weighting coefficients DE3, DE4, while when the weighting coefficient selection signal DP2=logic 0, it selects the weighting coefficients DO3, DO4. The rest is configured in the same way as the first stage combined value calculation circuit 40 shown in Fig. 7.

Note that in the first stage combined value calculation circuit 80, the noise amount calculation circuits 44-3, 44-4, the noise amount comparison circuit 45, the weighting coefficient calculation circuit 46, the noise threshold value circuit 47, and the weighting coefficient selection circuit 48 configure a weighting coefficient supply circuit.

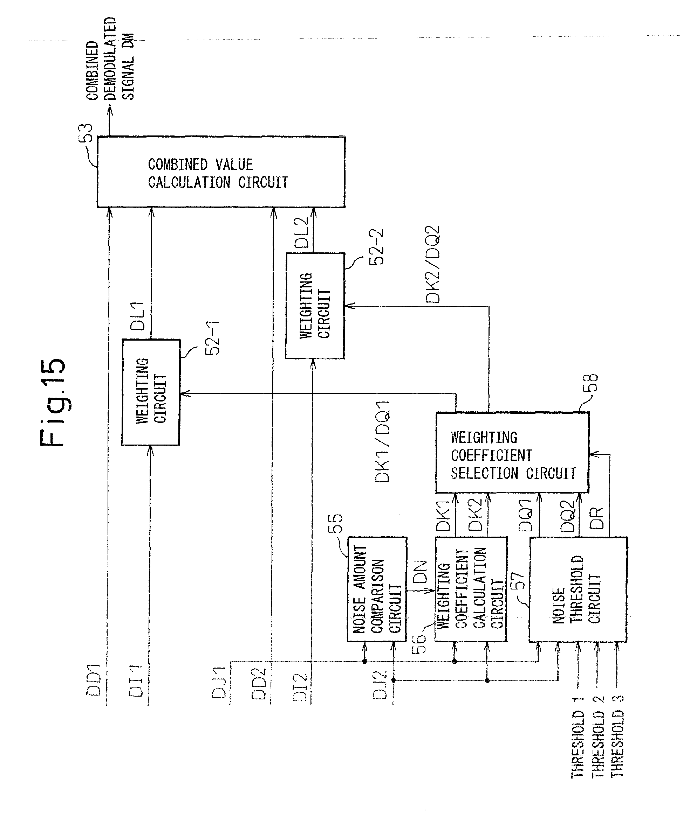

Figure 15 is a block circuit diagram showing principal parts of the second stage combined value calculation circuit 90. The second stage combined value calculation circuit 90 is provided with a noise threshold value circuit 57 and a weighting coefficient selection circuit 58. The noise threshold value circuit 57 receives as input the amount of noise DJ1 output by the first stage combined value calculation circuit 70, the amount of noise DJ2 output by the second stage combined value calculation circuit 80, the threshold value 1, threshold value 2, threshold value 3 and outputs the weighting coefficients DQ1, DQ2 and the weighting coefficient selection signal DR to the weighting coefficient selection circuit 58. It operates the same as the noise threshold value circuit 27 provided in the first embodiment of the present invention for the amounts of noise DJ1, DJ2.

The weighting coefficient selection circuit 58 selects the weighting coefficients DK1, DK2 output by the weighting coefficient calculation circuit 56 or the weighting coefficients, DQ2 output by the noise threshold value circuit 57 and gives them to the weighting circuits 52-1, 52-2. When the weighting coefficient selection signal DR=logic 1, it selects the weighting coefficients DK1, DK2, while when the weighting coefficient selection signal DR=logic 0, it selects the weighting coefficients DQ1, DQ2. The rest is configured in the same way as the second stage combined value calculation circuit 50 shown in Fig. 8.

Note that in the second stage combined value calculation circuit 90, the noise amount comparison circuit 55, weighting coefficient calculation circuit 56, noise threshold value circuit 57, and weighting coefficient selection circuit 58 configure the weighting coefficient supply circuit.

According to the fifth embodiment of the diversity receiver according to the present invention configured in this way, the OFDM demodulated signals DC1 to DC4 of the branches 1 to 4 are combined so that the greater the amount of noise of a branch of a demodulated signal, the smaller the combining ratio, so it is possible to reduce the combined amount of a demodulated signal degraded due to noise and improve the reception performance of a diversity receiver having two branches. SIXTH EMBODIMENT

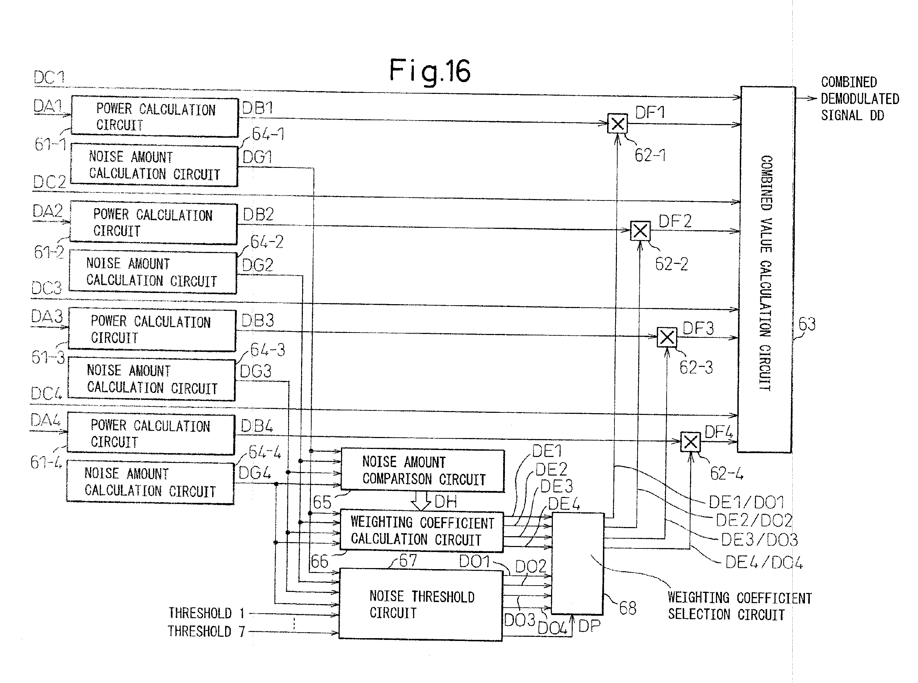

Figure 16 is a block circuit diagram showing principal parts of a sixth embodiment of a diversity receiver according to the present invention. The sixth embodiment of the present invention is used for an OFDM receiver having four branches (branch 1 to branch 4) and is an improvement of the third embodiment of the present invention shown in Fig. 9.

In the sixth embodiment of the present invention, a noise threshold value circuit 67 and a weighting coefficient selection circuit 68 are provided. The noise threshold value circuit 67 receives as input a threshold value 1 to threshold value 7 (where, threshold value 1<threshold value 2<threshold value 3<threshold value 4<threshold value 5<threshold value 6<threshold value 7) and amounts of noise DG1 to DG4 of the branches 1 to 4 and outputs weighting coefficients DO1 to DO4 and a weighting coefficient selection signal DP to the weighting coefficient selection circuit 68.

Note that the threshold value 1 to threshold value 7 may be selected from for example the values of the following (1) to (7): (1) A value the same as the amount of noise when the CN ratio becomes the required value demanded at the time of reception of a single system in the case of a reception state of a single system. (2) A value the same as the amount of noise when the CN ratio becomes the required value demanded at the time of reception of a diversity system using two branches in the case of a reception state of a diversity system using two branches.

(3) A value the same as the amount of noise when the CN ratio becomes the required value demanded at the time of reception of a diversity system using three branches in the case of a reception state of a diversity system using three branches. (4) A value the same as the amount of noise when the CN ratio becomes the required value demanded at the time of reception of a diversity system using four branches in the case of a reception state of a diversity system using four branches.

(5) A value the same as the amount of noise when increasing the amount of noise of one branch and the CN ratio becomes equal to the required CN ratio at the time of reception at a single system in the case of a reception state at a diversity system using four branches and a CN ratio made the required value demanded at the time of reception in a diversity system using four branches.

(6) A value the same as the amount of noise when increasing the amounts of noise of two branches by the same amounts and the CN ratio becomes equal to the required CN ratio at the time of reception at a single system in the case of a reception state at a diversity system using four branches and a CN ratio made the required value demanded at the time of reception in a diversity system using four branches.

(7) A value the same as the amount of noise when increasing the amounts of noise of three branches by the same amounts and the CN ratio becomes equal to the required CN ratio at the time of reception at a single system in the case of a reception state at a diversity system using four branches and a CN ratio made the required value demanded at the time of reception in a diversity system using four branches.

The weighting coefficient selection circuit 68 selects the weighting coefficients DE1 to DE4 output by the weighting coefficient calculation circuit 65 or the weighting coefficients DO1 to DO4 output by the noise threshold value circuit 67 and gives them to the weighting circuits 62-1 to 62-4. It selects the weighting coefficients DE1 to DE4 when the weighting coefficient selection signal DP=logic 1, while selects the weighting coefficients DO1 to DO4 when the weighting coefficient selection signal DP=logic 0. The rest is configured in the same way as the third embodiment of the present invention shown in Fig. 9.

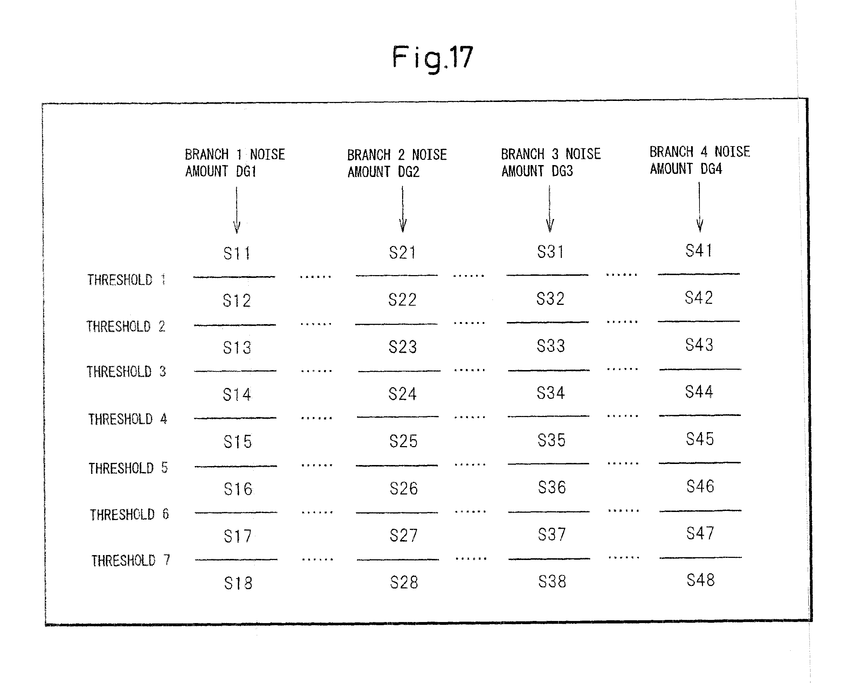

Figure 17 is a view for explaining the operation of the noise threshold value circuit 67. In Fig. 17, S11 to S18 show the states of the relative magnitude of the amount of noise DG1 of the branch 1 with respect to the threshold value 1 to threshold value 7, that is, S11 shows the state of the amount of noise DG1<threshold value 1, S12 shows the state of the threshold value 1≤amount of noise DG1<threshold value 2, S13 shows the state of the threshold value 2<amcunt of noise DG1<threshold value 3, S14 shows the state of the threshold value 3≤amount of noise DG1<threshold value 4, S15 shows the state of the threshold value 4≤amount of noise DG1<threshold value 5, S16 shows the state of the threshold value 5≤amount of noise DG1<threshold value 6, S17 shows the state of the threshold value 6≤amount of noise DG1<threshold value 7, and S18 shows the state of the threshold value 7≤amount of noise DG1.

S21 to S28 show the states of the relative magnitudes of the amount of noise DG2 of the branch 2 with respect to the threshold value 1 to threshold value 7, that is, S21 shows the state of the amount of noise DG2<threshold value 1, S22 shows the state of the threshold value 1≤amount of noise DG2<threshold value 2, S23 shows the threshold value 2≤amount of noise DG2<threshold value 3, S24 shows the threshold value 3≤amount of noise DG2<threshold value 4, S25 shows the threshold value 4≤amount of noise DG2<threshold value 5, S26 shows the threshold value 5≤amount of noise DG2<threshold value 6, S27 shows the threshold value 6≤amount of noise DG2<threshold value 7, and S28 shows the threshold value 7<amount of noise DG2.

S31 to S38 show the states of relative magnitude of the amount of noise DG3 of the branch 3 with respect to the threshold value 1 to threshold value 7, that is, S31 shows the state of the amount of noise DG3<threshold value 1, S32 shows the state of the threshold value 1≤amount of noise DG3<threshold value 2, S33 shows the state of the threshold value 2≤amount of noise DG3<threshold value 3, S34 shows the state of the threshold value 3≤amount of noise DG3<threshold value 4, S35 shows the state of the threshold value 4≤amount of noise DG3<threshold value 5, S36 shows the state of the threshold value 5≤amount of noise DG3<threshcld value 6, S37 shows the state of the threshold value 6≤amount of noise DG3<threshold value 7, and S38 shows the state of the threshold value 7≤amount of noise DG3.

S41 to S48 show the states of the relative magnitude of the amount of noise DG4 of the branch 4 with respect to the threshold value 1 to threshold value 7, that is, S41 shows the state of the amount of noise DG4<threshold value 1, S42 shows the state of the threshold value 1≤amount of noise DG4<threshold value 2, S43 shows the state of the threshold value 2≤amount of noise DG4<threshold value 3, S44 shows the state of the threshold value 3≤amount of noise DG4<threshold value 4, S45 shows the state of the threshold value 4≤amount of noise DG4<threshold value 5, S46 shows the state of the threshold value 5≤amount of noise DG4<threshold value 6, S47 shows the state of the threshold value 6≤amount of noise DG4<threshold value 7, and S48 shows the state of the threshold value 7≤amount of noise DG4.

In the sixth embodiment of the present invention, the noise threshold value circuit 67 outputs as the weighting coefficient DO1 the value 8 when the amount of noise DG1 is S11, the value 7 when the amount of noise DG1 is S12, the value 6 when the amount of noise DG1 is S13, the value 5 when the amount of noise DG1 is S14, the value 4 when the amount of noise DG1 is S15, the value 3 when the amount of noise DG1 is S16, the value 2 when the amount of noise DG1 is S17, and the value 1 when the amount of noise DG1 is S18.

Further, it outputs as the weighting coefficient DO2 the value 8 when the amount of noise DG2 is S21, the value 7 when the amount of noise DG2 is 522, the value 6 when the amount of noise DG2 is 523, the value 5 when the amount of noise DG2 is S24, the value 4 when the amount of noise DG2 is S25, the value 3 when the amount of noise DG2 is S26, the value 2 when the amount of noise DG2 is S27, and the value 1 when the amount of noise DiG2 is S28.

Further, it outputs as the weighting coefficient DO3 the value 8 when the amount of noise DG3 is S31, the value 7 when the amount of noise DG3 is S32, the value 6 when the amount of noise DG3 is 533, the value 5 when the amount of noise DG3 is S34, the value 4 when the amount of noise DG3 is S35, the value 3 when the amount of noise DG3 is S36, the value 2 when the amount of noise DG3 is S37, and the value 1 when the amount of noise DG3 is S38.

Further, it outputs as the weighting coefficient DO4 the value 8 when the amount of noise DG4 is S41, the value 7 when the amount of noise DG4 is S42, the value 6 when the amount of noise DG4 is S43, the value 5 when the amount of noise DG4 is S44, the value 4 when the amount of noise DG4 is 545, the value 3 when the amount of noise DG4 is 546, the value 2 when the amount of noise DG4 is S47, and the value 1 when the amount of noise DG4 is 548.

In this way, the noise threshold value circuit 67 outputs as the weighting coefficients DO1 to DO4 preset fixed values in accordance with the states of relative magnitude the amounts of noise DG1 to DG4 with respect to the threshold value 1 to threshold value 7. Further, the noise threshold value circuit 67 outputs as the weighting coefficient selection signal DP the logic 1 when the states of the amounts of noise DG1, DG2, DG3, DG4 are S11, S21, S31, S41 and outputs the logic 0 in other cases.

Note that in the sixth embodiment of the present invention, the noise amount calculation circuits 64-1 to 64-4, noise amount comparison circuit 65, weighting coefficient calculation circuit 66, noise threshold value circuit 67, and weighting coefficient selection circuit 68 configure the weighting coefficient supply circuit.

In the sixth embodiment of the present invention configured in this way, when the amounts of noise DG1, DG2, DG3, DG4 are S11, S21, S31, S41, the weighting circuits 62-1, 62-2, 62-3, 62-4 are given the weighting coefficients DE1, DE2, DE3, DE4 output by the weighting coefficient calculation circuit 66, so the sixth embodiment of the present invention operates in the same way as the third embodiment of the present invention and gives effects similar to the case of the third embodiment of the present invention.

As opposed to this, when the amounts of noise DG1, DG2, DG3, DG4 are other than S11, S21, S31, S41, the weighting circuits 62-1, 62-2, 62-3, 62-4 are given weighting coefficients DO1, DO2, DO3, DO4 output by the noise threshold value circuit 67.

Here, when the states of the amounts of noise DG1 to DG4 with respect to the threshold value 1 to threshold value 7 differ, even if giving weighting coefficients DE1 to DE4 corresponding to the results of comparison of noise amounts DH of the amounts of noise DG1 to DG4 to the weighting circuits 62-1 to 62-4 like in the first embodiment of the present invention, it is not possible to effectively reduce the combined amount of a demodulated signal degraded due to noise, but if giving fixed value weighting coefficients DO1 to DO4 to the weighting circuits 62-1 to 62-4, it is possible to effectively reduce the combined amount of a demodulated signal degraded due to noise by the method of setting the fixed values.

In the above way, according to the sixth embodiment of the diversity receiver according to the present invention, the OFDM demodulated signals DC1 to DC4 of the branches 1 to 4 are combined so that the greater the amount of noise of a branch of a demodulated signal, the smaller the combining ratio, so it is possible to reduce the combined amount of a demodulated signal degraded to noise and improve the reception performance of a diversity receiver having four branches,

### SEVENTH EMBODIMENT

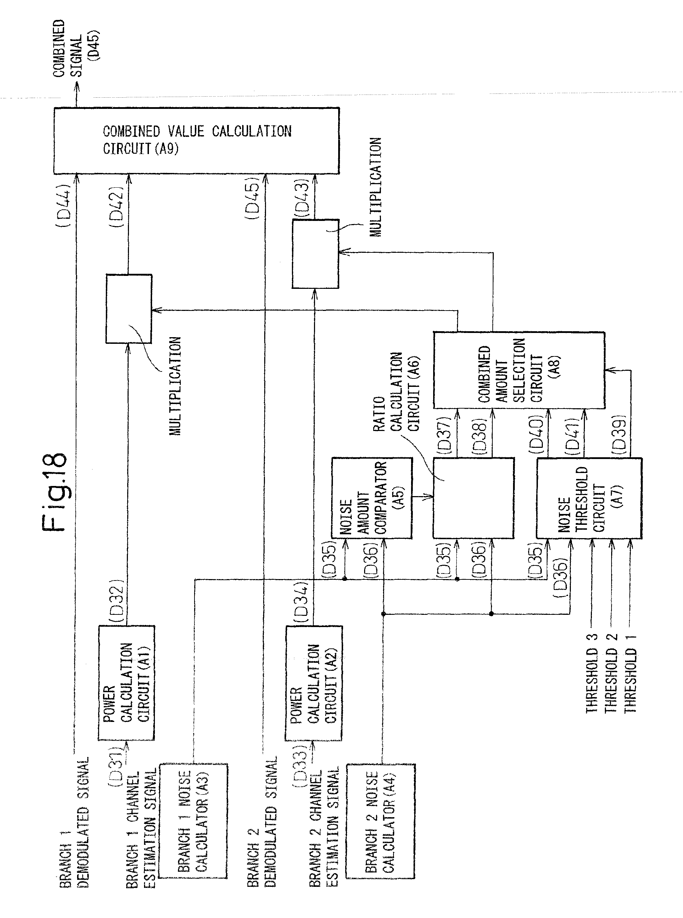

Figure 18 is a block circuit diagram showing principal parts of a seventh embodiment of a diversity receiver according to the present invention and is for explaining an example of a diversity combining circuit.

As shown in Fig. 18, the seventh embodiment provides a two branch diversity OFDM receiver receiving an OFDM modulated signal which finds an OFDM signal power value D32 of a branch 1 by a power calculation circuit A1 based on a channel estimation signal D31 of the branch 1 and further finds an OFDM signal power value D34 of a branch 2 by a power calculation circuit A2 based on a channel estimation signal D33 of a branch 2 and based on a channel estimation signal.

The amounts of noise D35 and D36 calculated by the noise calculators (noise amount calculation circuits) A3 and A4 of the different branches are input to the noise comparator A5, ratio calculation circuit A6, and noise threshold value circuit A7. The ratios D37 and D38 of the combined amounts of the branches calculated at the ratio calculation circuit A6, the noise level D39 of the branches calculated at the noise threshold value circuit A7, and the signals D40 and D41 showing the ratios of the combined amounts are input to the combined amount selection circuit A8, values are selected by the noise level D39 and multiplied with the values D32 and D34 calculated based on the channel estimation signals of the branches, and the OFDM signal power values D42 and D45 are calculated.

Further, the OFDM signal power value D42 obtained by multiplication of the demodulated data D44 of the branch 1 and combining ratio and the OFDM signal power value D43 obtained by multiplication of the demodulated data D45 of the branch 2 and combining ratio are input to the combined value calculation circuit A9. The combined signal D45 calculated by this combined value calculation circuit A9 is reduced in effect of noise in the resultant combined signal.

### EIGHTH EMBODIMENT

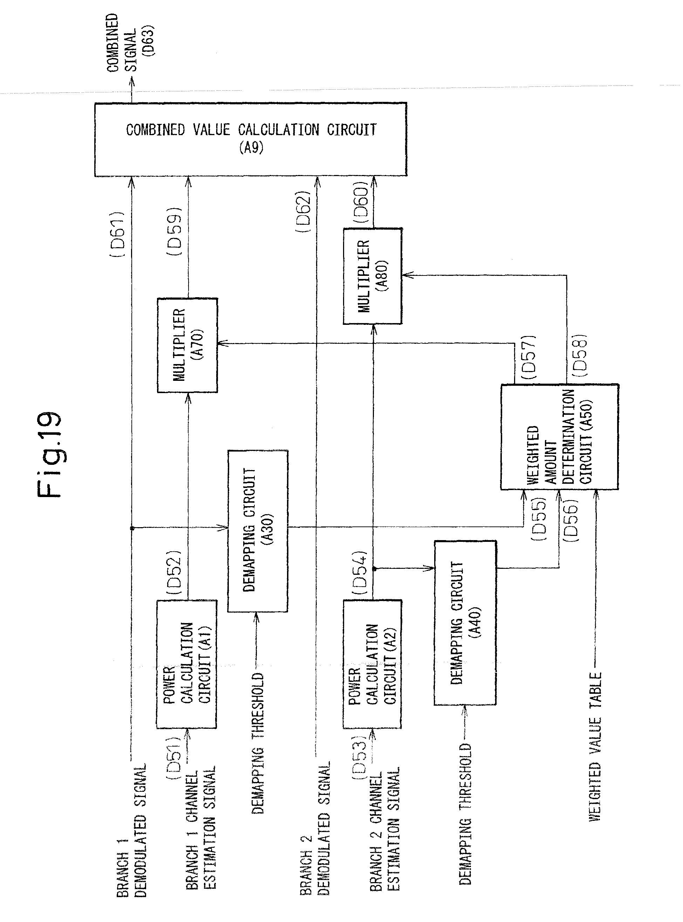

Figure 19 is a block circuit diagram showing principal parts of an eighth embodiment of a diversity receiver according to the present invention and is for explaining an example of a selective diversity circuit.

As shown in Fig. 19, the eighth embodiment provides a two branch diversity OFDM receiver receiving and demodulating an OFDM modulated signal which finds the OFDM signal power value D52 of the branch 1 by the power calculation circuit A1 based on the channel estimation signal D51 of the branch 1 and further finds the OFDM signal power value D54 of the branch 2 by the power calculation circuit A2 based on the channel estimation signal D53 of the branch 2 and based on the channel estimation signal.

Further, the demapping circuits A30 and A40 are used to determine the soft judgment bit values (soft judgment bits) D55 and D56. Further, the weighting amount determination circuit A50 is provided in advance with a table linked with soft judgment bit values. The soft judgment bit values D55 and D56 of the branches are used to determine the weighting amounts D57 and D58.

The multipliers A70 and A80 multiply the OFDM signal power value data D52 and D54 found by the power calculation circuits A1 and A2 and the calculated weighting amounts D57 and D58 of the branches. The demodulated data D61 of the branch 1, the OFDM signal power value D59 obtained by multiplication with the combining ratio, the demodulated data D62 of the branch 2, and the OFDM signal power value D60 obtained by multiplication with the combining ratio are input to the combined value calculation circuit A9, whereby a combined signal D63 reduced in effect of noise is calculated.

As explained above, according to the present invention, it is possible to improve the reception performance at an OFDM apparatus in ground wave digital broadcasts, wireless LANs, etc. Further, in diversity technology, by controlling the combined amounts of signals at the time of entry of noise, it is possible to compare the results with conventional combination including noise and greatly improve the performance.

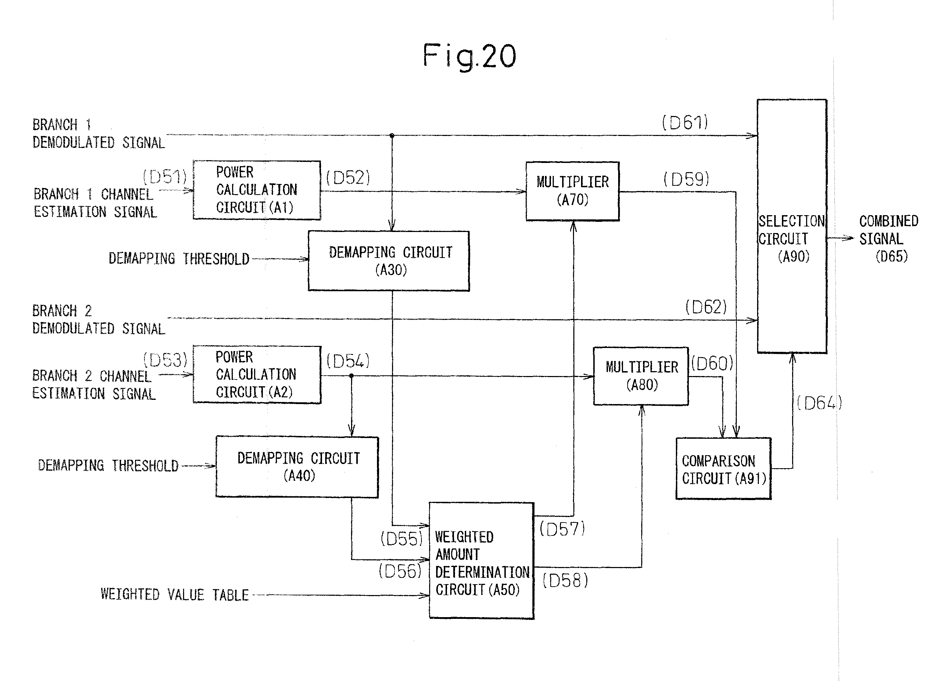

Figure 20 is a view for explaining a modification of the eighth embodiment of the diversity receiver shown in Fig. 19 and is for explaining another example of a selective diversity circuit.

As clear from a comparison of Fig. 20 and the above-mentioned Fig. 19, the modification of the eighth embodiment replaces the combined value calculation circuit A9 in the eighth embodiment with the provision of a selection circuit A90 into which the demodulated data D61 of the branch 1 and the demodulated data D62 of the branch 2 are input, judges the magnitudes of the OFDM signal power values D59 and D60 multiplied with the combining ratio by a comparison circuit A91, and selects and outputs the demodulated data of the branch with the larger OFDM signal power value.

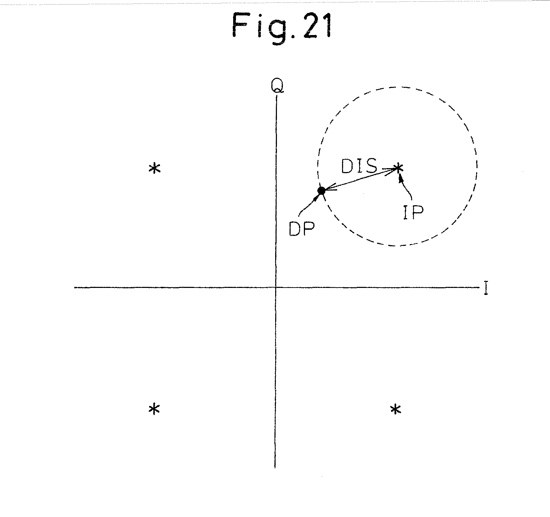

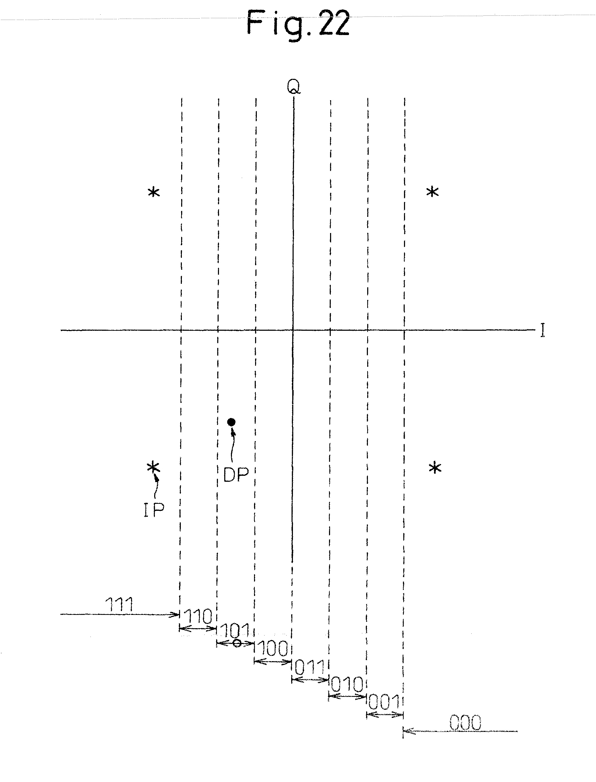

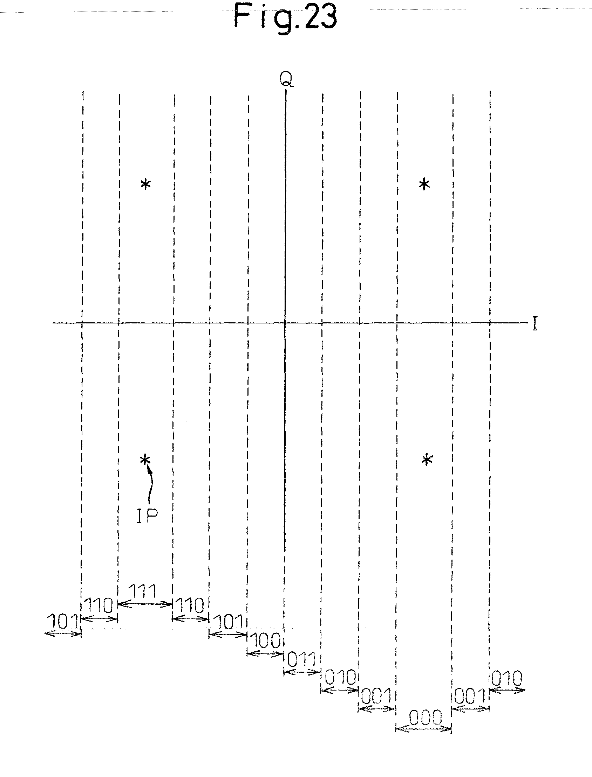

Figures 21, 22 and 23 are views for explaining demapping processing in the eighth embodiment of a diversity receiver shown in Fig. 19. Here, Fig. 21 shows an example of QPSK (Quadrature Phase-Shift Keying) constellation, Fig. 22 is for explaining usual demapping processing, and, further, Fig. 23 is for explaining the demapping processing applied to the above-mentioned eighth embodiment. Note that Fig. 22 shows an example of I-axis 3-bit soft judgment.

Note that "QPSK" is one demodulation system for converting a digital signal to an analog signal. The modulation system enables the transmission and reception of four-value (2 bit) data by a single modulation by applying single values to four different phases in the wave after conversion and is used for example for digital satellite broadcasts, cable modems, etc.

As shown in Fig. 21, in the eighth embodiment, the "dispersion" is the distance DIS between the received signal on the constellation (position DP of received data) and the ideal point IP. The dispersion (DIS) is used as the amount of noise (amount of noise of carrier). Note that this dispersion is substantially equivalent to the CN ratio (Carrier to Noise Ratio). Further, the above dispersion integrated over a certain time can be used as the amount of noise (amount of noise for any unit time).

As shown in Fig. 22, in usual demapping processing, at which position input data (for example, 10 bits, 12 bits, etc.) appears is replaced with several (in Fig. 22, three) soft judgment bits. Here, in Fig. 22, the I-axis demapping value of the received data (DP) is expressed as "101". Note that the ranges of the threshold values are set in advance.

As shown in Fig. 23, the demapping processing applied in the above-mentioned eighth embodiment uses the demapping as the quasi amount of noise, so the usual demapping explained with reference to Fig. 22 changes the values assigned to the ranges and treats values other than the hard judgment bits as noise. Here, a "hard judgment bit" means as follows: Giving for example the example of a 3-bit soft judgment, when the value at this time is "101", the topmost bit "1" is a hard judgment bit, while the remaining "01" are soft judgment bits.

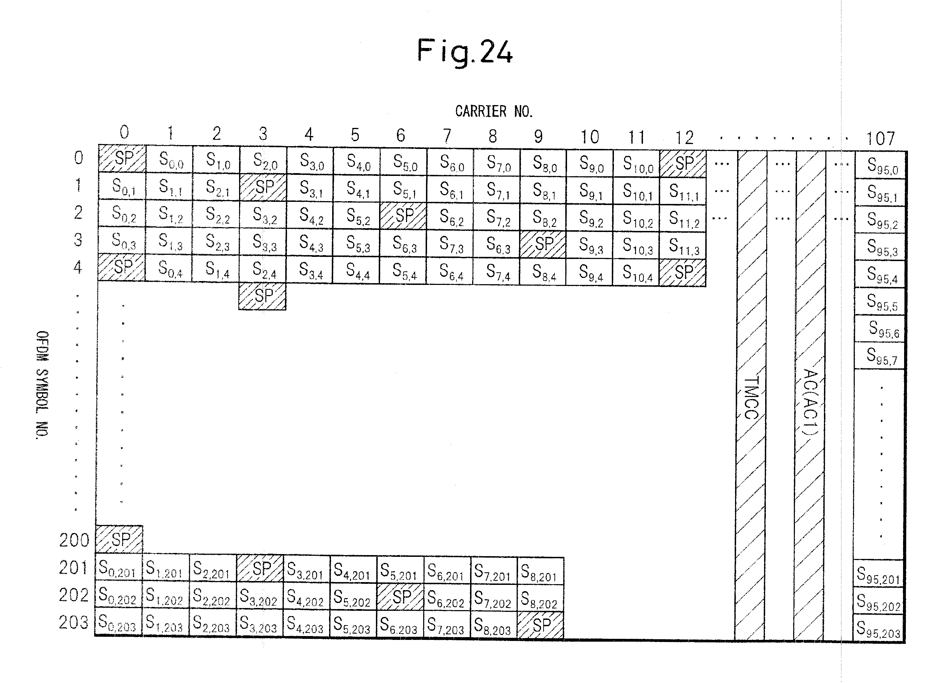

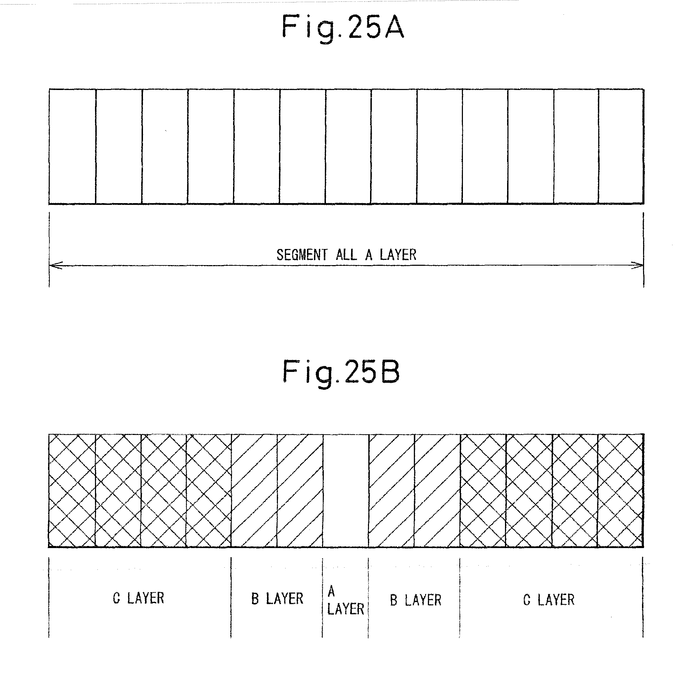

Figures 24, 25A and 25B are views showing an example of the of OFDM segment coefficients of a synchronous modulator in the diversity receiver of the present invention.

Figure 24 shows the OFDM segments (models) of a synchronous modulator (QPSK, 16QAM (Quadrature Amplitude Modulation), 64QAM carrier modulation system). Note that in Fig. 24, Sij indicates the carrier symbol in the data segment after interleaving. Further, an SP (Scattered Pilot: pilot signal) is inserted at intervals of once every 12 carriers in the carrier direction and once every four symbols in the symbol direction.

Note that in Fig. 24, a TMCC (Transmission and Multiplexing Configuration Control) signal is inserted for transmitting control information. Further, AC (Auxiliary Channel) is a signal for transmitting additional information. AC1 is inserted in the same number in all segments.

Figure 25A shows the case where all of the 13 segments are the A layer, while Fig. 25B shows the case where the 13 segments are configured by the three layers of the layer A, layer B, and layer C.

That is, a "layer" is defined by for example the ISDB-T (Terrestrial Integrated Services Digital Broadcasting: Japanese digital television system). Channel coding is performed by OFDM segment units (for example, digital television broadcasts performed by 13 OFDM segment units and digital audio broadcasts by one or three OFDM segment unit). Due to this, in a single television channel, it is possible to use part for a fixed reception service and use the remainder for a mobile reception service. This type of transmission is called "layer transmission". Each layer is configured by one or more OFDM segments. The modulation system, coding rate, interleaving length, and other parameters may be set for each layer. Up to a maximum of three layers may be provided.

Figure 25B shows an example of configuring the 13 segments by an A layer, B layer, and C layer, that is, three layers.

Note that Figs. 24, 25A and 25B just show examples of OFDM segment coefficients to which the present invention can be applied. The present invention can be broadly applied to other various segment coefficients as well of course.

### INDUSTRIAL APPLICABILITY

In the explanations of the above-explained embodiment, the explanations were given taking as examples the cases of two branches or the cases of four branches, but the present invention can also be applied to the case of three branches or five or more branches.

Further, in the above embodiments, the explanations were given taking as examples the cases of using the present invention for an OFDM receiver, but the present invention can also be broadly applied to diversity receivers receiving even wireless signals other than OFDM signals so long as the wireless signals include channel estimation signals.

## Claims

1. A diversity receiver receiving a plurality of branches of diversity signals, said diversity receiver **characterized in that** it is provided with:
a plurality of noise amount calculation circuits calculating an amount of noise for each branch and
a diversity combining circuit comparing the magnitudes of the amounts of noise calculated by said noise amount calculation circuits and changing a diversity combining ratio in accordance with the amount of noise of a branch of power with a large amount of noise.

2. The diversity receiver as claimed in claim 1, said diversity receiver **characterized in that** each said noise amount calculation circuit calculates said amount of noise from variance integrals of a demapped value of the data carrier signal and a demapping reference value.

3. The diversity receiver as claimed in claim 1, said diversity receiver **characterized in that** each said noise amount calculation circuit calculates said amount of noise from a variance integral of a pilot signal.

4. The diversity receiver as claimed in claim 1, said diversity receiver **characterized in that** said noise amount calculation circuit calculates said amount of noise from variance integrals of AC and TMCC signals.

5. The diversity receiver as claimed in claim 1, said diversity receiver **characterized in that** it is provided with a plurality of noise threshold values and gives a new noise level by said plurality of noise threshold values.

6. The diversity receiver as claimed in claim 5, said diversity receiver **characterized in that** it changes said diversity combining ratio using a fixed combining ratio according to the noise level of each said branch.

7. The diversity receiver as claimed in claim 5, said diversity receiver **characterized in that** said threshold value is set for each layer.

8. A diversity receiver receiving a plurality of branches of diversity signals, said diversity receiver **characterized in that** it is provided with
a plurality of noise amount calculation circuits calculating an amount of noise for each branch and
a selective diversity circuit comparing magnitudes of the amounts of noise calculated by said noise amount calculation circuits and selecting said branches and controlling the weighting amounts in accordance with the amount of noise of a branch with a large amount of noise.

9. The diversity receiver as claimed in claim 8, said diversity receiver **characterized in that** each said noise amount calculation circuit calculates said amount of noise from variance integrals of a demapped value of the data carrier signal and a demapping reference value.

10. The diversity receiver as claimed in claim 8, said diversity receiver **characterized in that** said pilot signal is an SP signal.

11. The diversity receiver as claimed in claim 8, said diversity receiver **characterized in that** each said noise amount calculation circuit calculates said amount of noise from variance integrals of AC and TMCC signals.

12. The diversity receiver as claimed in claim 8, said diversity receiver **characterized in that** it is provided with a plurality of noise threshold values and gives a new noise level by said plurality of noise threshold values.

13. The diversity receiver as claimed in claim 12, said diversity receiver **characterized in that** said threshold value is set for each layer.

14. A diversity receiver receiving a diversity signal, said diversity receiver **characterized in that** it is provided with
a demapping circuit performing demapping in advance before combination and calculating soft judgment bits and
a diversity combining circuit deeming said soft judgment bits as the amount of noise, comparing the magnitudes of the amounts of noise of the branches, and changing the diversity combining ratio in accordance with the amount of noise of the power of a branch with a large amount of noise.

15. The diversity receiver as claimed in claim 14, said diversity receiver **characterized in that** it provides a threshold value other than the threshold value determining said soft judgment bits to determine said amount of noise.

16. The diversity receiver as claimed in claim 15, said diversity receiver **characterized in that** said threshold value is set for each layer.

17. A diversity receiver receiving a diversity signal, said diversity receiver **characterized in that** it is provided with a demapping circuit performing demapping in advance before combination and calculating soft judgment bits and
a selective diversity circuit deeming said soft judgment bits as the amount of noise, comparing magnitudes of the amounts of noise of the branches, and selecting said branches and controlling the weighting amounts in accordance with the amount of noise of a branch with a large amount of noise.

18. The diversity receiver as claimed in claim 17, said diversity receiver **characterized in that** it provides a threshold value other than the threshold value determining said soft judgment bits to determine said amount of noise,

19. The diversity receiver as claimed in claim 18, said diversity receiver **characterized in that** said threshold value is set for each layer.

20. The diversity receiver combining a plurality of branches of demodulated signals, said diversity receiver **characterized in that** it combines said plurality of branches of demodulated signals so that the greater the amount of noise of a branch of a demodulated signal, the smaller the combining ratio.

21. The diversity receiver as claimed in claim 20, said diversity receiver **characterized in that** it is provided with:
a plurality of power calculation circuits calculating signal power values of said plurality of branches,
a plurality of weighting circuits weighting a plurality of signal power values output by said plurality of the power calculation circuits,
a weighting coefficient supply circuit supplying a plurality of weighting coefficients to said plurality of weighting circuits the greater the amount of noise of a branch of a demodulated signal the smaller the combining ratio, and
a combined value calculation circuit receiving as input said plurality of branches of demodulated signals and a plurality of weighted signal power values output by said plurality of weighting circuits and combining said plurality of branches of demodulated signals by the maximum ratio combining method.

22. The diversity receiver as claimed in claim 21, said diversity receiver **characterized in that** said weighting coefficient supply circuit is provided with
a plurality of noise amount calculation circuits calculating amounts of noise of said plurality of branches,
a noise amount comparison circuit comparing the amounts of noise output by said plurality of noise amount calculation circuits, and
a weighting coefficient calculation circuit calculating said plurality of weighting coefficients from the amounts of noise output by said plurality of noise amount calculation circuits and the results of comparison of noise amounts output by said noise amount comparison circuit.

23. The diversity receiver as claimed in claim 22, said diversity receiver **characterized in that** each said noise amount calculation circuit calculates the amount of noise from a relative variance integral of a demapped value of a data carrier signal with a demapping reference value, a variance integral of a channel estimation signal, or variance integrals of AC and TMCC signals.

24. The diversity receiver as claimed in claim 21, said diversity receiver **characterized in that** said weighting coefficient supply circuit is provided with:
a plurality of noise amount calculation circuits calculating amounts of noise of said plurality of branches,
a noise amount comparison circuit comparing amounts of noise output by said plurality of noise amount calculation circuits,
a weighting coefficient calculation circuit calculating a first plurality of selected weighting coefficients from the amounts of noise output by said plurality of noise amount calculation circuits and the results of comparison of noise amounts output by said noise amount comparison circuit,
a noise threshold value circuit outputting a second plurality of selected weighting coefficients based on the relative magnitude of the amounts of noise output by said plurality of noise amount calculation circuits and one or more threshold values, and
a selection circuit controlled by said noise threshold value circuit and selecting said first plurality of selected weighting coefficients or said second plurality of selected weighting coefficients as said plurality of weighting coefficients.

25. The diversity receiver as claimed in claim 24, said diversity receiver **characterized in that** each said noise amount calculation circuit calculates the amount of noise from a relative variance integral of a demapped value of a data carrier signal with a demapping reference value, a variance integral of a channel estimation signal, or variance integrals of AC and TMCC signals.

26. The diversity receiver as claimed in claim 20, said diversity receiver **characterized in that** the receiver further has
a plurality of front stage combined value calculation circuits and
a rear stage combined value calculation circuit at the rear of said plurality of front stage combined value calculation circuits;
said plurality of front stage combined value calculation circuits are provided with
a plurality of power calculation circuits calculating signal power values of a plurality of branches of part of said plurality of branches,
a plurality of weighting circuits weighting said plurality of signal power values output by the plurality of the power calculation circuits,
a weighting coefficient supply circuit supplying a plurality of weighting coefficients to said plurality of weighting circuits so that the greater the amount of noise of the branch of the demodulated signal, the smaller the combination ratio, and
a combined value calculation circuit receiving as input said plurality of branches of demodulated signals and a plurality of weighted signal power values output by said plurality of weighting circuits and using a maximum ratio combining method to combine a plurality of branches of part of said plurality or branches of demodulated signals and calculate a combined power value; and
said rear stage combined value calculation circuit combines a plurality of combined demodulated signals output by said plurality of front stage combined value calculation circuits by a single coefficient or a plurality of coefficients.

27. The diversity receiver as claimed in claim 26, said diversity receiver **characterized in that** said weighting coefficient supply circuit is provided with
a plurality of noise amount calculation circuit calculating amounts of noise of a plurality of branches of part of said plurality of branches,
a noise amount comparison circuit comparing the amounts of noise output by said plurality of noise amount calculation circuits, and
a weighting coefficient calculation circuit calculating said plurality of weighting coefficients from the amounts of noise output by said plurality of noise amount calculation circuits and the results of comparison of noise amounts output by said noise amount comparison circuit.

28. The diversity receiver as claimed in claim 27, said diversity receiver **characterized in that**
each of said plurality of front stage combined value calculation circuits is configured to give to said rear stage combined value calculation circuit the smallest amount of noise in the amounts of noise output by said plurality of noise amount calculation circuits, and
said rear stage combined value calculation circuit is provided with
a plurality of weighting circuits weighting a plurality of combined power values output by said plurality of front stage combined value calculation circuits,
a weighting coefficient supply circuit supplying a plurality of weighting coefficients to said plurality of weighting circuits so that the greater the amount of noise given to said rear stage combined value calculation circuit in the combined demodulated signal output by a front stage combined value calculation circuit, the smaller the combining ratio, and
a combined value calculation circuit receiving as input the plurality of combined demodulated signals output by said plurality of front stage combined value calculation circuits and the plurality of weighted combined power values output by the plurality of weighting circuits of said rear stage combined value calculation circuit and combining the combined demodulated signals output by said plurality of front stage combined value calculation circuits by the maximum ratio combining method.

29. The diversity receiver as claimed in claim 28, said diversity receiver **characterized in that** said weighting coefficient supply circuit of the rear stage combined value calculation circuit is provided with:
a noise amount comparison circuit comparing amounts of noise given from said plurality of front stage combined value calculation circuits,
a weighting coefficient calculation circuit calculating a first plurality of selected weighting coefficients from the amounts of noise given from said plurality of front stage combined value calculation circuits and the results of comparison of noise amounts output by said noise amount comparison circuit of the rear stage combined value calculation circuit, and
a weighting coefficient calculation circuit calculating said plurality of weighting coefficients to said plurality of weighting circuits of said rear stage combined value calculation circuit from the amounts of noise given from said plurality of front stage combined, value calculation circuits and the results or comparison of noise amounts output by the noise amount comparison circuit of said rear stage combined value calculation circuit.

30. The diversity receiver as claimed in claim 28, said diversity receiver **characterized in that** said weighting coefficient supply circuit of the rear stage combined value calculation circuit is provided with
a noise amount comparison circuit comparing the amounts of noise given from said plurality of front stage combined value calculation circuits,
a weighting coefficient calculation circuit calculating a first plurality of selected weighting coefficients from the amounts of noise given from said plurality of front stage combined value calculation circuits and the results of comparison of noise amounts output by said noise amount comparison circuit of the rear stage combined value calculation circuit,
a noise threshold value circuit receiving as input the amounts of noise given from said plurality of front stage combined value calculation circuits and at least one threshold value and calculating a second plurality of selected weighting coefficients based on the relative magnitude of the amounts of noise given from said plurality of front stage combined value calculation circuits and said at least one threshold value, and
a selection circuit controlled by said noise threshold value circuit and selecting said first plurality of selected weighting coefficients or said second plurality of selected weighting coefficients as said weighting coefficients.

31. The diversity receiver as claimed in claim 27, said diversity receiver **characterized in that** each said noise amount calculation circuit calculates the amount of noise from a relative variance integral of a demapped value of a data carrier signal with a demapping reference value, a variance integral of a channel estimation signal, or variance integrals of AC and TMCC signals.

32. The diversity receiver as claimed in claim 26, said diversity receiver **characterized in that** said weighting coefficient supply circuit is provided with
a plurality of noise amount calculation circuits calculating amounts of noise of a plurality of branches of part of said plurality of branches,
a noise amount comparison circuit comparing amounts of noise output by said plurality of noise amount calculation circuits,
a weighting coefficient calculation circuit calculating a first plurality of selected weighting coefficients from the amounts of noise output by said plurality of noise amount calculation circuits and the results of comparison of noise amounts output by said noise amount comparison circuit,
a noise threshold value circuit calculating a second plurality of selected weighting coefficients based on the amounts of noise output by said plurality of noise amount calculation circuits and at least one threshold values, and
a selection circuit controlled by said noise threshold value circuit and selecting as said weighting coefficients said first plurality of selected weighting coefficients or said second plurality of selected weighting coefficients.

33. The diversity receiver as claimed in claim 32, said diversity receiver **characterized in that**
each of said plurality of front stage combined value calculation circuits is configured to give to said rear stage combined value calculation circuit the smallest amount of noise in the amounts of noise output by said plurality of noise amount calculation circuits, and
said rear stage combined value calculation circuit is provided with
a plurality of weighting circuits weighting a plurality of combined power values output by said plurality of front stage combined value calculation circuits,
a weighting coefficient supply circuit supplying a plurality of weighting coefficients to said plurality of weighting circuits so that the greater the amount of noise given to said rear stage combined value calculation circuit in the combined demodulated signal output by a front stage combined value calculation circuit, the smaller the combining ratio, and
a combined value calculation circuit receiving as input the plurality of combined demodulated signals output by said plurality of front stage combined value calculation circuits and the plurality of weighted combined power values output by the plurality of weighting circuits of said rear stage combined value calculation circuit and combining the combined demodulated signals output by said plurality of front stage combined value calculation circuits by the maximum ratio combining method.

34. The diversity receiver as claimed in claim 33, said diversity receiver **characterized in that** said weighting coefficient supply circuit of the rear stage combined value calculation circuit is provided with:
a noise amount comparison circuit comparing amounts of noise given from said plurality of front stage combined value calculation circuits,
a weighting coefficient calculation circuit calculating a first plurality of selected weighting coefficients from the amounts of noise given from said plurality of front stage combined value calculation circuits and the results of comparison of noise amounts output by said noise amount comparison circuit of the rear stage combined value calculation circuit, and
a weighting coefficient calculation circuit calculating said plurality of weighting coefficients tc said plurality of weighting circuits of said rear stage combined value calculation, circuit from the amounts of noise given, from said plurality of front stage combined value calculation circuits and the results of comparison of noise amounts output by the noise amount comparison circuit of said rear stage combined value calculation circuit.

35. The diversity receiver as claimed in claim 33, said diversity receiver **characterized in that** said weighting coefficient supply circuit of the rear stage combined value calculation circuit is provided with
a noise amount comparison circuit comparing the amounts of noise given from said plurality of front stage combined value calculation circuits,
a weighting coefficient calculation circuit calculating a first plurality of selected weighting coefficients from the amounts of noise given from said plurality of front stage combined value calculation circuits and the results of comparison of noise amounts output by said noise amount comparison circuit of the rear stage combined value calculation circuit,
a noise threshold value circuit receiving as input the amounts of noise given from said plurality of front stage combined value calculation circuits and at least one threshold value and calculating a second plurality of selected weighting coefficients based on the relative magnitude of the amounts of noise given from said plurality of front stage combined value calculation circuits and said at least one threshold value, and
a selection circuit controlled by said noise threshold value circuit and selecting said first plurality of selected weighting coefficients or said second plurality of selected weighting coefficients as said weighting coefficients.

36. The diversity receiver as claimed in claim 32, said adversity receiver **characterized in that** each said noise amount calculation circuit calculates the amount of noise from a relative variance integral of a demapped value of a data carrier signal with a demapping reference value, a variance integral of a channel estimation signal, or variance integrals of AC and TMCC signals.
